# EUROPEAN PATENT APPLICATION

(11) **EP 3 632 853 A1**
(43) Date of publication of application: **08.04.2020**
(21) Application number: 19158378.0
(22) Date of filing: 20.02.2019
(51) Int. Cl.: C02F 1/00, C02F 1/28, C02F 1/42, C02F 1/68

(54) **DEVICE FOR FORMING A LIQUID TREATMENT SYSTEM, LIQUID TREAT-MENT SYSTEM AND CARTRIDGE FOR USE IN THE DEVICE**

(30) Priority: 04.10.2018 EP 18198694
(71) Applicant: Brita GmbH, 65232 Taunusstein Hessen (DE)
(72) Inventor: BERNARD, Dominik, 65232 Taunusstein (DE); ZÖLLER, Jochen, 56355 Nastätten (DE)

(57) **Abstract**

A device for forming a liquid treatment system includes a
component (25;29;35;42;71;96;119) including a liquid-permeable wall (24;31;36;46;84;97;125) and at least one vessel (1;58;110;136). The at least one vessel (1;58;110;136) defines: a first vessel interior space (6;61;114;137) for receiving liquid to be treated; a second vessel interior space (22;73;117;138) for treated liquid; and a section (23;118;139) for accommodating a liquid treatment medium. The first and second vessel interior spaces (6,22;61,73;114,117;137,138) are in liquid communication with each other via the section (23;118;139). A majority of the first vessel interior space (6;61;114;137) is arranged at a level at least equal to a level of the section (23;118;139) in an upright orientation of the at least one vessel (1;58;110;136). The component (25;29;35;42;71;96;119) is arranged in a position in which the component (25;29;35;42;71;96;119) closes one of an opening between the second vessel interior space (22;73;117;138) and the section (23;118;139) and a passage (113) from the first vessel interior space (6;61;114;137) so as to allow liquid to flow between the second vessel interior space (22;73;117;138) and the section (23;118;139) through the liquid-permeable wall (24;31;36;46;84;97;125). The component (25;29;35;42;71;96;119) is movable into the position through the second vessel interior space (22;73;117;138).

## Description

The invention relates to a device for forming a liquid treatment system, including:
a component including a liquid-permeable wall; and
at least one vessel, the at least one vessel defining:
   a first vessel interior space for receiving liquid to be treated;
   a second vessel interior space for treated liquid; and a section for accommodating a liquid treatment medium,
wherein the first and second vessel interior spaces are in liquid comm u-nication with each othervia the section,
wherein a majority of the first vessel interior space is arranged at a level at least equal to a level of the section in an upright orientation of the at least one vessel, and
wherein the component is arranged in a position in which the component closes one of an opening between the second vessel interior space and the section and a passage from the first vessel interior space so as to allow liquid to flow between the second vessel interior space and the section through the liquid-permeable wall.

The invention also relates to a cartridge for use in such a device.

The invention also relates to a liquid treatment system.

DE 2 208 500 A discloses a device shaped as a jug that is provided in its interior with two chambers, of which one serves as a water reservoir and the other serves to receive a filter insert. The filter pot consists of an upper apertured plate, beneath which an additional sieve may be arranged, an intermediate sieve and a bottom sieve. Different media are accommodated in the two chambers formed in this way, which are needed to soften and purify the water. The filter pot is seated on a separate base, which is provided with cams, ribs or the like projecting upwards and downwards, an d which maintain a distance between the bottom of the sieve pot and the base. The base can be screwed into the lower part of the pitcher, this joint preferably being sealed. In this way, the filter pot can easily be removed to replace or regenerate the purifying media. The pitcher can be filled with water through a filling opening. The water only enters the filter pot from below and from there into the water reservoir chamber in the manner of communicating vessels.

A problem of the known pitcher is that it is imperative that the base be properly sealed when the water treatment medium is put in place, since water will otherwise leak out during use. This requires dexterity on the part of the user, as well as durable sealing means.

It is an object of the invention to provide a device for forming a liquid treatment system and liquid treatment system allowing for easier placement of the liquid treatment media, wherein correct sealing is less critical to correct use of the liquid treatment system.

This object is achieved according to a first aspect by the device according to the invention, which is characterised in that the component is movable into the position through the second vessel interior space.

The section for accommodating the liquid treatment medium can thus be situated beneath the second vessel interior space in the upright orientation. The component is put in place by moving the component through the second vessel interior space into the operative position of the component. To make the device relatively compact, the section for accommodating the liquid treatment medium can extend to the lowermost level of the device or close to the lowermost level of the device. Because the first and second vessel interior spaces are in liquid communication with each other via the section and a majority of the first vessel interior space is arranged at a level at least equal to a level of the section in an upright orientation of the at least one vessel, the first vessel interior space will empty into the section and the second vessel interior space in the upright orientation, in the manner of communicating vessels. The liquid-permeable wall may limit the rate of flow into the second vessel interior space and be arranged to retain any loose matter forming the liquid treatment medium. Because the first vessel interior space is thus arranged to empty into the section and the second vessel interior space so as to equalise the liquid level, the first vessel interior space can have a smaller volume than the second vessel interior space and the section combined, indeed smaller than the volume of the second vessel interior space. Thus, when the second vessel interior space has been filled, a relatively large volume of treated liquid is available for dispensing and the device contains relatively little untreated liquid compared, for example to systems in which a funnel is suspended in a jug with a treatment cartridge in the outlet of the funnel. For a given storage capacity of the second vessel interior space, the overall volume of the device can thus be kept quite low.

With the component removably arranged in position, the liquid treatment medium can be replaced by withdrawing the component through the second vessel interior space and an aperture providing external access thereto.

In an embodiment, the first vessel interior space has a smaller volume than at least the second vessel interior space and the section combined, e.g. a smaller volume than the second vessel interior space.

Thus, a relatively large proportion of the available interior volume is available for storing treated liquid, as opposed to storing untreated liquid or being empty.

In an embodiment, each of the at least one vessels has a respective base for placement on a support surface to define the upright orientation.

An embodiment of the device further includes a non-return valve in a passage from the first vessel interior space to the section.

In an embodiment, the section is arranged beneath the second vessel interior space in the upright orientation and the liquid-permeable wall is at least part of a partition separating the second vessel interior space from the section.

The partition may allow liquid to pass through over a relatively wide area.

This embodiment has relatively compact lateral dimensions. Moreover, where the liquid treatment medium in the section is a liquid treatment medium for the treatment of liquid in a diffusive process, treatment of the liquid in the second vessel interior space continues.

In an example of this embodiment, a common side wall bounds and surrounds the second vessel interior space and the section along their circumference, and the component extends to the side wall along its circumference.

Thus, a seat of a particular shape for the removable componentis not required. The side wall may taper to define an approximate operational position of the component and the liquid-permeable wall, however. The liquid-permeable wall essentially partitions a compartment in a vessel into the section and the second vessel interior space. The liquid-permeable wall may have apertures distributed across a majority of its area.

In an embodiment, the liquid-permeable wall is provided with a dome-shaped part, e.g. a dome-shaped part including at least one venting aperture.

Apertures through which the liquid can pass are located in one or more sections next to a base of the dome-shaped part. Gas can accumulate in the dome-shaped part and thus out of the way of the apertures in the liquid-permeable wall through which the liquid can pass. This prevents these apertures from being obstructed by gas bubbles. Where at least one venting aperture is provided, the gas can escape relatively easily. The venting aperture(s) is or are located at a higher level, in use, than the apertures in the liquid-permeable wall through which the liquid can pass. The venting apertures may in particular be located at an apex of the dome. Moreover, buoyant granular liquid treatment medium provided in a relatively loose bed is less liable to rise up, in use, when at least one venting aperture is provided.

In an embodiment, at least one of the at least one vessels is portable.

Where the vessel defining the first vessel interior space is portable, this vessel can be held under a water tap or other type of dispenser outlet. Where the vessel defining the second vessel interior space is portable, the vessel and the second vessel interior space can be brought to a point of use, e.g. from a storage location such as a refrigerator.

In an embodiment of the device, the section, the first vessel interior space and the second vessel interior space are defined in a single vessel by at least one partition.

In an example of this embodiment, the second vessel interior space is open at a main mouth at a top of the vessel, and the device includes a main closure part for closing at least a majority of the main mouth and a further closure part for closing and opening a fill opening providing access to the first vessel interior space independently of the closing of at least a majority of the main mouth by the main closure part.

As explained, the first vessel interior space will generally have a smaller volume than the second vessel interior space. Thus, to fill the second vessel interior space, the first vessel interior space will generally be filled with liquid multiple times. The second vessel interior space can be kept closed when liquid is poured into the first vessel interior space, thus preventing contamination of the treated liquid.

In an embodiment in which at least one of the at least one vessels is portable and the section, the first vessel interior space and the second vessel interior space are defined in a single vessel by at least one partition, the device includes a handle and a closure part for closing and opening a fill opening providing access to the first vessel interior space, journalled for movement between a closed and an open position and including a part positioned for engagement by a digit of a hand holding the device by the handle in at least the closed position.

This makes repeated filling of the first vessel interior space, e.g. under a water tap, relatively easy.

An example of a device in which at least one of the at least one vessels is portable further includes a handle, wherein the first vessel interior space is at least partly defined inside the handle.

This device is relatively light and compact.

An example of a device in which at least one of the at least one vessels is portable and the section, the first vessel interior space and the second vessel interior space are defined in a single vessel by at least one partition further includes a pouring spout for pouring liquid from the second vessel interior space.

The pouring spout may be positioned at an opposite side of the single vessel to that of the first vessel interior space. Then, as the single vessel is tipped to pour liquid out, the level of liquid in the first vessel interior space further decreases, so that it is possible to empty the vessel approximately completely. The pouring spout may be in the form of a lip at an upper edge of a side wall of the vessel.

In an embodiment, the second vessel interior space is open at a main mouth at a top of the vessel, and the device further includes a lid for closing at least a majority of the main mouth.

The main mouth may in particular be sized to allow the removable component to be moved through it. The lid can then be put on to counter contamination of liquid in the second vessel interior space.

In an example of an embodiment in which at least one of the at least one vessels is portable and the section, the first vessel interior space and the second vessel interior space are defined in a single vessel by at least one partition, and which further includes a pouring spout for pouring liquid from the second vessel interior space, the second vessel interior space is open at a main mouth at a top of the vessel, the device further includes a lid for closing at least a majority of the main mouth and the pouring spout is formed at least partly in a side wall of the lid.

This addresses the problem of dust or similar contamination entering into the second vessel interior space. It would be possible to provide the lid with a dedicated, hinged closure element for a pouring spout formed on the vessel. However, this would make the lid more complicated and expensive to manufacture, as well as less robust. Forming the pouring spout at least partly in a side wall of the lid ensures that dust cannot fall into the pouring spout. At the same time, a dedicated hinged closure element for such a pouring spout can be dispensed with. In a particular example of this embodiment, the pouring spout is formed underneath an overhanging edge part of the lid.

In an example of the embodiment in which the section, the first vessel interior space and the second vessel interior space are defined in a single vessel by at least one partition, the second vessel interior space is open at a main mouth at a top of the vessel, and the device further includes a lid for closing at least a majority of the main mouth, the first vessel interior space is open at a fu r-ther mouth at a top of the vessel, and at least a majority of the further mouth is also at least closable by the lid.

The device thus has relatively few parts and does not need to be cleaned as frequently.

In an example of an embodiment in which the second vessel interior space is open at a main mouth at a top of the vessel and the device further includes a lid for closing at least a majority of the main mouth, the lid includes a main part for closing at least a majority of the main mouth and a closure part, movably attached to the main part, for closing at least a majority of the further mouth in a closed position and for opening at least part of the further mouth in an open position.

Liquid can thus be treated without removing the lid. The lid may be removed to remove the component including the liquid-permeable wall, but this occurs relatively infrequently.

In a particular example, the closure part is slidable with respect to the main part.

This makes the lid relatively robust and simple to manufacture compared with, for example, a lid with a pivoting closure part.

An embodiment of the device includes an outlet for dispensing liquid from at least one of the section and the second vessel interior space and a seat for receiving a replaceable liquid treatment device in a path of the liquid to the outlet.

Thus, the liquid can be treated a second time just before the liquid is dispensed. The liquid treatment device may in particular include a liquid treatment medium for imparting a flavour to the liquid. This flavour may, for example, mask any less pleasant taste imparted to the liquid by the liquid treatment medium in the section via which liquid passes between the first and second vessel interior spaces.

In an example of this embodiment, the outlet is for dispensing liquid from the second vessel interior space.

The outlet may in particular comprise a pouring spout.

In a further example of the same embodiment, the seat is for receiving a planar, e.g. disc-shaped liquid treatment device.

The seat can thus be relatively shallow, and the outlet can have a relatively large cross-sectional area.

In an example of any embodiment that includes an outlet for dispensing liquid from at least one of the section and the second vessel interior space and a seat for receiving a replaceable liquid treatment device in a path of the liquid to the outlet, and in which the second vessel interior space is open at a main mouth at a top of the vessel and the device further includes a lid for closing at least a majority of the main mouth, the lid comprises a part arranged to engage the liquid treatment device to press the liquid treatment device into the seat.

The lid thus fulfils two functions, namely to prevent contamination of the liquid in the second vessel interior space and to hold the liquid treatment device in the seat.

In an example of the embodiment in which the section, the first vessel interior space and the second vessel interior space are defined in a single vessel by at least one partition, the second vessel interior space is open at a main mouth at a top of the vessel, the device further includes a lid for closing at least a majority of the main mouth, and the device includes an outlet for dispensing liquid from at least one of the section and the second vessel interior space and a seat for receiving a replaceable liquid treatment device in a path of the liquid to the outlet, the seat includes at least one device for removably attaching the liquid treatment device to the lid.

In this embodiment, the vessel, in particular the section defining the second vessel interior space, is easy to manufacture, since the vessel need not include any part of the seat. On the other hand, the liquid treatment device is reliably positioned, merely by the act of positioning the lid on the vessel. The attachment can be at least partly by way of a shape-lock to ensure correct positioning, optionally supported by, for example, magnetic or reversible adhesive attachment. The devices for removably attaching the liquid treatment device to the lid can be snap-lock devices or structures for engaging snap-lock devices provided on the liquid treatment device.

In an example of the embodiment defined in the paragraph preceding the previous paragraph, the lid is arranged to close the main mouth, and a pouring opening is formed in the lid.

In this embodiment, any bypass of liquid past the liquid treatment device is relatively easily prevented. Attaching the liquid treatment device to the lid places the liquid treatment device in sealed relationship in front of the pouring opening. Liquid can only pass from the second vessel interior space to the pouring opening through the liquid treatment device.

In an example of the embodiment in which the section, the first vessel interior space and the second vessel interior space are defined in a single vessel by at least one partition, the second vessel interior space is open at a main mouth at a top of the vessel, the device further includes a lid for closing at least a majority of the main mouth, the device includes an outlet for dispensing liquid from at least one of the section and the second vessel interior space and a seat for receiving a replaceable liquid treatment device in a path of the liquid to the outlet, and the seat includes at least one device for removably attaching the liquid treatment device to the lid, the liquid treatment device comprises a vessel-shaped container with liquid-permeable apertures.

The liquid treatment device is thus essentially constituted as a basket or colander in which liquid treatment medium can be placed, and in particular replaced, by removing the vessel-shaped container from the lid. One or more of the liquid-permeable apertures function as liquid inlet(s) and one or more of the liquid-permeable apertures may function as liquid outlet(s), or the liquid outlet or outlets may be defined in a section of the lid closing the vessel-shaped container.

In an embodiment, the component comprises a cartridge having a housing defining a chamber in which the liquid treatment medium is arranged, and the liquid-permeable wall is part of the housing.

According to another aspect of the invention, a cartridge for such an embodiment of the device is provided,
wherein the cartridge housing comprises:
an axis transverse to the liquid-permeable wall;
at least one liquid inlet, formed on only one side of a plane containing the cartridge axis; and
at least one liquid outlet, formed at least partly in the liquid-permeable wall.

The first vessel interior space will generally be located adjacent the second vessel interior space and the section. In this embodiment, the liquid inlet or inlets can all be placed close to the first vessel interior space or a passage conducting liquid from the first vessel interior space towards the section. The liquid need not flow around the cartridge to reach the inlet or inlets, so that the overall device can be relatively compact. Where the cartridge axis has an, in use, upright orientation, the inlet or inlets are all on one side. This will be the side closest to the first vessel interior space. Where the cartridge axis has an, in use, horizontal orientation, the inlets can all be at the lower end, so that the liquid to be treated rises up through the cartridge housing. It is noted that the at least one liquid outlets may be distributed across the liquid-permeable wall. This could be of use where the cartridge housing contains a liquid treatment medium for the treatment of liquid by a diffusive process. Treatment can then continue even after liquid has passed from the cartridge into the second vessel interior space. It is further noted that the at least one liquid inlet may be provided in a side wall of the cartridge housing or an axial end wall at an opposite axial end to the liquid-permeable wall, or in both. The cartridge axis will generally be an axis through a centre of the liquid-permeable wall. The cartridge axis extends in a direction substantially perpendicular to at least a majority of the liquid-permeable wall, such that the exterior of the liquid-permeable wall faces predominantly in axial direction.

In an embodiment of the cartridge, the at least one liquid outlets are each arranged only on an opposite side of the plane to the at least one liquid inlets.

This embodiment helps counter non-uniform treatment of the liquid and non-uniform exhaustion of the liquid treatment medium, particularly where the treatment is by way of a diffusive process such as sorption, including ion exchange or elution. Substantial shortcuts through the liquid treatment medium are avoided. The liquid-permeable wall is at one axial end of the housing with respect to the axis. The inlets are on one side of a plane through the axis and outlets on an opposite side of the plane. The direction of flow is thus su b-stantially in a direction perpendicular to that plane. The liquid must flow essentially from one side of the cartridge of the housing to the other. That is to say, the liquid must cross essentially the width of the chamber, if the cartridge axis is an upright axis, or the height of the chamber, if the cartridge is an, in use, horizontal axis.

In an embodiment of the cartridge, the cartridge housing comprises a side wall and the at least one liquid inlets are each formed at least partly in the side wall.

The side wall is the wall facing in a direction transverse to the axial direction. In embodiments in which the cartridge axis has an upright orientation in use, no space need be provided for liquid to flow underneath the cartridge housing to reach the liquid inlet or inlets.

In an example of the embodiment of the cartridge in which the cartridge housing comprises a side wall and the at least one liquid inlets are each formed at least partly in the side wall, the at least one inlet is provided at least partly in a side wall section that is planar or has a radius of curvature in a plane para I-lel to the liquid-permeable wall that is equal to at least half a smallest width of the cartridge housing.

Thus, this side wall section is relatively flat, so that the at least one liquid inlets can at least collectively cover a relatively wide surface area whilst the liquid still flows in predominantly from one direction, in use.

In an embodiment of the cartridge, the cartridge housing has an elongated shape, seen looking onto the liquid-permeable wall, and the liquid inlet(s) and the liquid outlet(s) are provided on opposite sides in longitudinal direction.

Thus, a relatively long flow path through the chamber is created. The longitudinal axis defines opposite sides of the cartridge housing, one coinciding with the side on which the liquid inlet(s) is or are provided, the other coinciding with the side on which the liquid outlet(s) is or are provided. The liquid has to cover the longest distance. Additionally, since the vessel must be shaped to receive the cartridge, this embodiment permits the use of a vessel with an elongated cross-section, e.g. in the form of a jug, shaped and dimensioned to fit the door of a household refrigerator.

An embodiment of the cartridge comprises at least one baffle defining a meandering flow path through the chamber.

Each baffle is essentially a wall around which the liquid is forced to flow. This embodiment further avoids the presence of shortcuts through the liquid treatment medium in the chamber and increases the contacttime of the liquid with the liquid treatment medium.

In a particular example of this embodiment, the baffle(s) extend(s) into the chamber from an inside surface of the side wall.

This makes the cartridge easier to manufacture. The side wall of the cartridge housing is generally part of a vessel-shaped cartridge housing component of which the base is either the liquid-permeable wall or an opposite wall. To create a meandering path with a plurality of baffles, it suffices if they extend alternately from opposite sides of the interior surface of the side wall into the chamber up to close to that interior surface on the opposite side of the cha m-ber. Thus, only the vessel-shaped housing component, and not the vessel-shaped housing component and a further cartridge housing component for closing the vessel-shaped housing component, need be provided with the baffles. Furthermore, the vessel-shaped housing component with the baffles can easily be filled with the liquid treatment medium and then closed by the further cartridge housing component without baffles.

In an embodiment of the cartridge, the cartridge housing has an axial dimension smaller than its smallest width transverseto the axis.

This keeps any stagnation zones in the chamber relatively small. Axial dimension and width are with respect to the axis, the liquid-permeable wall being at one axial end of the cartridge housing with respect to this axis. The direction of flow in this embodiment is mainly sideways with respect to the axis. The size of any stagnation zone at the axial end of the side on which the liquid inlet(s) is or are provided and the axial end of the side on which the liquid outlet(s) is or are provided is therefore relatively small. Where the axis is, in use, an upright axis, the axial dimension corresponds to the height of the ca r-tridge housing. The direction of flow is then mainly sideways, i.e. horizontal.

According to another aspect, the liquid treatment system according to the invention includes a device according to the invention and the liquid treatment medium or a cartridge according to the invention containing the liquid treatment medium.

In an embodiment, the device is any of the devices including an outlet for dispensing liquid from at least one of the section and the second vessel interior space and a seat for receiving a replaceable liquid treatment device in a path of the liquid to the outlet, and the system further includes the liquid treatment device, wherein the liquid treatment device includes at least one liquid treatment medium for the treatment of liquid by sorption, e.g. activated carbon.

The treated liquid is thus further treated just before the liquid is dispensed, e.g. to adsorb organic compounds, microbiological contamination and/or heavy metals. Organic compounds that have leached into the treated liquid can thus be removed, for example.

In an example of such an embodiment, the liquid treatment device includes a porous, liquid-pervious liquid treatment element.

The porous element may be self-supporting, so that a housing can be dispensed with. The porous element mechanically filters the liquid to remove particulate contamination.

In a particular example, the porous, liquid-pervious liquid treatment element is comprised of thermally bonded matter, e.g. thermally bonded granular matter.

Thermal bonding, especially of granular matter, results in a relatively stable porous element with a relatively high porosity and available surface area.

In an embodiment of the liquid treatment system, the liquid treatment medium is contained in a replaceable cartridge in the form of a pouch made at least partly of liquid-permeable sheet material.

Compared to a cartridge made of rigid liquid-impermeable material, this embodiment uses less material to house the liquid treatment medium. Furthermore, the cartridge can be deformed or compressed to bring into position. Where the section is arranged beneath the second vessel interior space, the treated liquid remains in contact with the liquid treatment medium relatively well. For liquid treatment media arranged to treat the liquid in a diffusive process, diffusion is relatively unhindered. The sheet material may be a foil or a fabric, including woven and non-woven fabric.

In an embodiment, the pouch is shaped to fit the section.

According to an independent aspect, which can be claimed as well, there is further disclosed in the following an assembly for storing and pouring liquid, the assembly including:
a vessel, the vessel having a base and being open at a mouth opposite the base, the mouth having a perimeter formed along at least part of the length of the perimeter by a main rim, wherein the vessel is provided with a pouring spout defined by a lip extending to a lip rim coinciding with a section of the main rim,
wherein the vessel is provided with a seat for receiving a liquid treatment device in a path of liquid poured through the spout, the seat being arranged to support the liquid treatment device so as to prevent movement of the liquid treatment device into an interior space of the vessel; and a lid for placement on the vessel,
wherein the lid includes a part protruding into the outlet towards the seat for engaging a liquid treatment device placed in the seat.

The vessel may include any of the features of the device and system according to the invention.

The vessel may be a carafe or jug. The liquid treatment device is arranged to provide liquid treatment, e.g. filtration of liquid, immediately prior to its being poured out. The lip has a folded configuration and defines a direction of flow of the liquid, as well as a space for receiving the protruding part of the lid. The lid takes on two functions, namely to prevent contamination of the liquid in the vessel and to hold the liquid treatment device in its seat, in particular in a sealed position essentially preventing a bypass of liquid through the seat.

In an embodiment, the lid and the vessel are provided with co-operating features for holding the lid to the vessel.

Thus, the lid and vessel can be dimensioned such that a certain pressing force is required to place the lid in its operative position against a counter-acting elastic force exerted by the seat and the liquid treatment device, in particular a sealing surface of the seat. The co-operating features counter this elastic force to hold the lid in place and also exert a force pressing the liquid treatment device against the sealing surface.

The co-operating features may include co-operating features providing a shape-lock, e.g. a snap-fit connection.

The co-operating features may include at least one depending part of the lid, e.g. a skirt, arranged to provide a friction-fit with one of an exterior and an interior surface of the vessel.

In an embodiment, the lid extendsto cover at least part of the main rim.

Thus, the position of the lid is relatively well-defined and a neat finish is provided.

In an embodiment, the lid includes a main part arranged to cover at least a majority of the mouth and a closure part, movably attached to the main part for opening and closing at least a section of a mouth of the vessel.

As a consequence, it is possible to fill the vessel without removing the lid, and thus to keep the liquid treatment device in place in the seat over an extended period of use. The lid need only be removed to replace the liquid treatment device or to clean the whole assembly.

In an embodiment, the seat is arranged to receive a planar liquid treatment device.

The planar liquid treatment device may in particular be disc-shaped. The planar liquid treatment device may include a porous liquid-pervious body providing for at least mechanical filtration of the liquid. The seat can be relatively shallow and provides a sealing surface lying in a plane facing in the direction in which the protruding part is arranged to provide a pressing force.

In an embodiment, the seat is arranged to prevent movement of the liquid treatment device in a direction at an angle to a vertical axis of the vessel in an upright orientation of the vessel defined by the base, and the protruding part comprises a blade depending from the lid and having an angled edge distal to the lid.

Thus, the liquid treatment device extends laterally in a direction transverse to the direction of flow of the liquid. The angle corresponds to a typical pouring angle. The blade may be oriented such that its major surfaces are essentially parallel to the direction of flow. The blade may in particular lie in a plane of symmetry of the lip. In this way, the liquid flow is not obstructed, but guided.

The invention will be explained in further detail with reference to the accompanying drawings, in which:
- Fig. 1: is a cross-sectional view of a first device for forming a liquid treatment system;
- Fig. 2: is a perspective view of a removable component of the device of Fig. 1;
- Fig. 3: is a perspective view from above of a lid for the device of Fig. 1;
- Fig. 4: is a perspective view from below of the lid of Fig. 3;
- Fig. 5: is a top plan view of a cartridge for the device of Figs. 1-4;
- Fig. 6: is a side plan view of the cartridge of Fig. 5;
- Fig. 7: is a perspective view of a different cartridge for the device of Figs. 1-4;
- Fig. 8: is a perspective view of yet another cartridge for the device of Figs. 1-4;
- Fig. 9: is a cross-sectional view of the cartridge of Fig. 8;
- Fig. 10: is a perspective view of a further cartridge for the device of Figs. 1-4;
- Fig. 11: is a cross-sectional view of the cartridge of Fig. 10;
- Fig. 12: is a first perspective view of a lid of a housing of the cartridge of Figs. 10 and 11;
- Fig. 13: is a second perspective view of the lid of Fig. 12;
- Fig. 14: is a first perspective view of a vessel-shaped component of the housing of the cartridge of Figs. 10 and 11;
- Fig. 15: is a second perspective view of a vessel-shaped component of the housing of the cartridge of Figs. 10 and 11;
- Fig. 16: is a plan view of a second device for forming a liquid treatment system;
- Fig. 17: is a cross-sectional view of the device of Fig. 16;
- Fig. 18: is a cross-sectional perspective view of the device of Figs. 16 and 17;
- Fig. 19: is a perspective view of the device of Figs. 16-18 with its lid and a closure part for a fill opening of the device removed;
- Fig. 20: is a front plan view of the device of Figs. 16-19;
- Fig. 21: is a top plan view of the device of Figs. 16-20 with its lid and the closure part removed;
- Fig. 22: is a detailed cross-sectional view of an inside of the device of Figs. 16-21;
- Fig. 23: is a perspective view of the closure part for the fill opening of the device of Figs. 16-22;
- Fig. 24: is a side plan view of the lid of the device of Figs. 16-23;
- Fig. 25: is a front plan view of the lid of the device of Figs. 16-24;
- Fig. 26: is a first perspective view of the lid of the device of Figs. 16-24, showing a vessel-shaped container of a liquid treatment device removably attached to the lid;
- Fig. 27: is a second perspective view of the lid with the vessel-shaped container removed;
- Fig. 28: is a perspective view of the vessel-shaped container also shown in Fig. 26;
- Fig. 29: is a cross-sectional view of the device of Figs. 16-27 and a cartridge placed in an operative position therein;
- Fig. 30: is a perspective view of the cartridge of Fig. 29;
- Fig. 31: is a side plan view of the cartridge of Figs. 29 and 30;
- Fig. 32: is a bottom plan view of the cartridge of Figs. 29-31;
- Fig. 33: is a top plan view of the cartridge of Figs. 29-32;
- Fig. 34: is a cross-sectional view of the cartridge of Figs. 29-33;
- Fig. 35: is a perspective view of a vessel-shaped component of a housing of the cartridge of Figs. 29-34;
- Fig. 36: is a top plan view of the vessel-shaped component;
- Fig. 37: is a perspective view of an alternative cartridge for the device of Figs. 16-29;
- Fig. 38: is a side plan view of the cartridge of Fig. 37;
- Fig. 39: is a top plan view of the cartridge of Figs. 37 and 38;
- Fig. 40: is a bottom plan view of the cartridge of Figs. 37-39;
- Fig. 41: is a cross-sectional view of the cartridge of Figs. 37-40;
- Fig. 42: is a cross-sectional view of a third device for forming a liquid treatment system;
- Fig. 43: is a further cross-sectional view of the device of Fig. 42;
- Fig. 44: is a perspective view of a cartridge for the device of Figs. 42-43; and
- Fig. 45: is a schematic cross-sectional view of a fourth device for forming a liquid treatment system.

In the following, examples of liquid treatment systems for the treatment of an aqueous liquid, e.g. mains drinking water will be discussed. The systems can be adapted for the treatment of other types of liquid. The liquid treatment includes in particular treatment by means of a diffusive process, e.g. sorption, which for present purposes includes treatment of liquid by ion exchange, adsorption and absorption.

A first embodiment includes a vessel in the shape of a jug 1 having a handle 2. The jug 1 has a base 3 for placement on a horizontal support surface to define an upright orientation of the jug 1. The jug 1 further includes a side wall 4 and partitioning wall 5. At least the base 3, side wall 4 and partitioning wall 5 may be integral parts of a body made in one piece. At least the majority of the handle 2 may be an integral part of the same body, although insert-moulding or the like may be used to provide a section of the handle 2 with different haptic properties. The body may be made of plastic, e.g. polypropylene.

The partitioning wall 5 defines two separate compartments extending to the base 3. A first compartment corresponds to a first vessel interior space 6. In the illustrated embodiment, the first vessel interior space 6 is at least partly defined in the handle 2. The first vessel interior space 6 is open at a first mouth 7 provided at a top of the jug 1 opposite the base 3. The first mouth 7 allows the first vessel interior space 6 to be filled with liquid to be treated, e.g. by holding the first mouth 7 under a water tap.

A passage 8 is defined in the partitioning wall 5 separating the first compartment from the second compartment. In an embodiment, a non-return valve (not shown) may be provided in the passage 8. Additionally or alternatively, a screen (not shown) may be provided in the passage 8.

The first and second compartment form communicating vessels due to the passage 8.

The second compartment extends from the base 3 to a second mouth 9 provided at a top of the jug 1. In the illustrated embodiment, the second mouth 9 is at the same level as the first mouth 7. The second mouth 9 has a perimeter formed along at least part of its length by a main rim, the upper edge of the side wall 4. The remainder of the perimeter is defined by the upper edge of the partitioning wall 5.

The side wall 4 comprises a lip 10 of which an upper edge defines a lip rim coinciding with a section of the main rim. The lip 10 forms a pouring spout for pouring liquid from the second compartment.

Arranged within the second compartmentis a structure 11 defining a seat for a planar liquid treatment device 12. The structure may be an integral part of the body of which the side wall 4 and base 3 also form a part. The planar liquid treatment device 12 can be dropped into the seat and is then supported by a sealing surface applied against a major surface of the planar liquid treatment device 12 along an edge thereof.

The planar liquid treatment device 12 of the example is disc-shaped, but other shapes are possible.

The planar liquid treatment device 12 may include a porous body that is pervious to the liquid to be treated. One or more sheets of fabric (woven or non-woven) may be applied to one or both of the major surfaces of the porous body. This fabric may be a mesh or fleece, for example non-woven fabric made of point-bonded polypropylene or polyethylene fibres. The porous body is self-supporting, as is the planar liquid treatment device 12.

The porous body may be made of one or more layers of thermally bonded loose, e.g. granular, matter. This matter includes the binder and may further include material for treating the liquid in a diffusive process such as sorption. This includes in particular activated carbon and, optionally, adsorbent material having a high affinity for heavy metals.

The binder may be a thermoplastic binder, for example, polyethylene having a relatively high molecular weight, e.g. in the order of 10⁶-10⁷ g/mol.

The thickness of the porous body may be in the range of 1-10 mm, e.g. 5-10 mm. Its diameter may be at least twice, e.g. at least ten times its thickness. The opposing major surfaces may be essentially parallel.

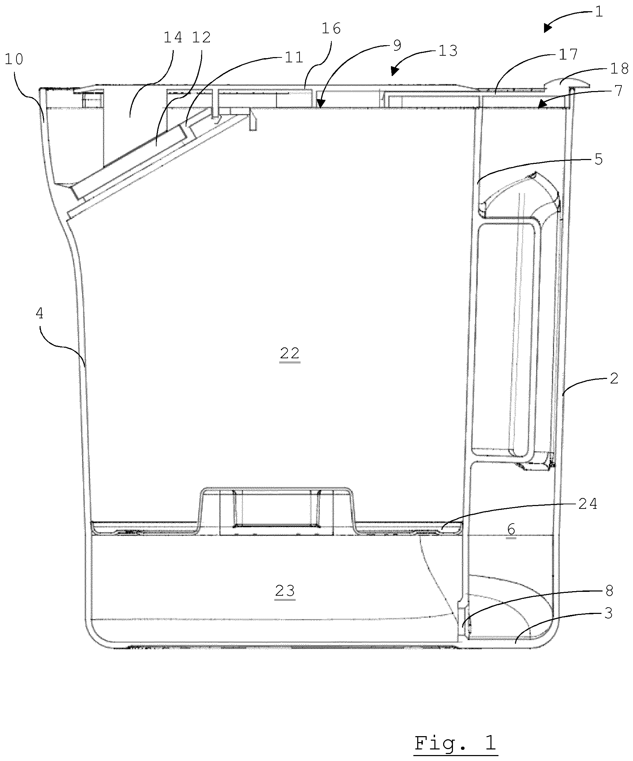

The first and second mouths 7,9 are closable by a lid 13 (Figs. 1, 3 and 4) for placement on the jug 1.

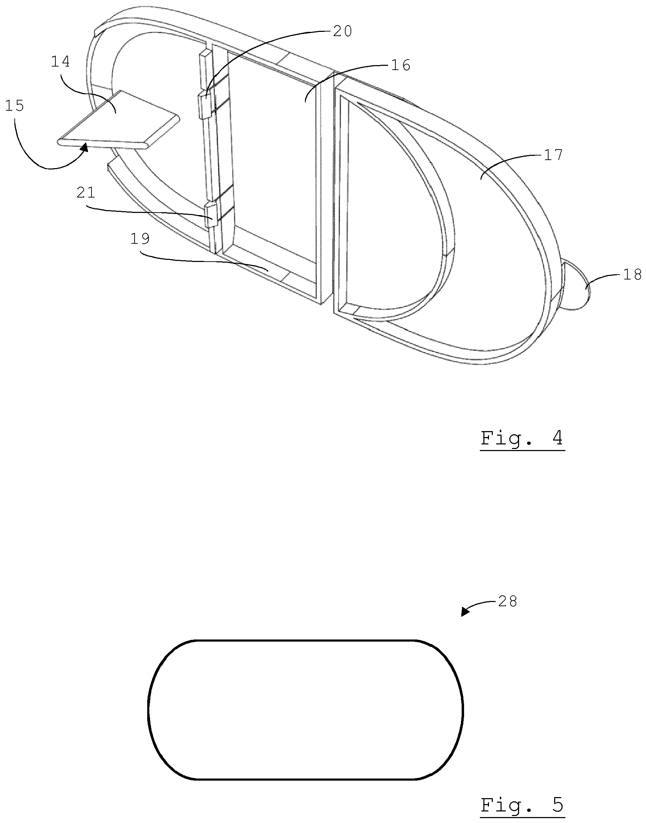

The lid 13 includes a part 14 depending downwards from the lid 13 when the latter is in place on the jug 1. This part 14 protrudes into the space between the lip 10 and the structure 11 defining the seat. The protruding lid part 14 is shaped like a blade and has an angled edge 15 (Fig. 4) essentially parallel to the plane of the planar liquid treatment device 12 when the latter is in position in the seat. The protruding lid part 14 thus holds the planar liquid treatment device 12 in engagement with the sealing surface of the seat, when the lid 13 is in position.

The lid 13 comprises a main part 16 and a closure part 17 movably journalled with respect to the main part 16. In this example, the movement is a sliding movement parallel to the mouths 7,9 of the jug 1. The closure part 17 is arranged to close and open the first mouth 7 to allow the first vessel interior space 6 to be filled with liquid to be treated. The closure part 17 is provided with a protruding operating part 18 that a user can grasp to move the closure part 17. The protruding operating part 18 allows for one-handed operation, in that a user can hold the jug 1 by the handle 2 and reach the protruding operating part 18 with his or her thumb in at least the closed position of the closure part 17.

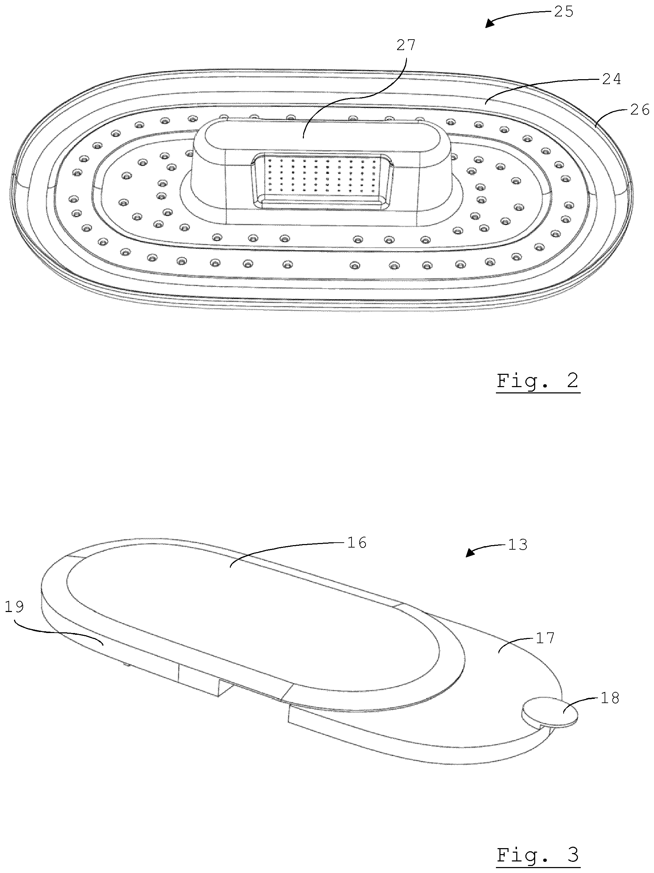

The lid 13 has a depending skirt 19 (Figs. 3 and 4) along at least part of its circumference and an overhanging part along most of its circumference. The overhanging part covers the rims at the top of the jug 1, except for the rim of the lip 10. The skirt 19 helps position the lid 13 laterally.

In addition, the jug 1 and the lid 13 are provided with co-operating features for holding the lid 13 to the jug 1, and thus the protruding lid part 14 to the planar liquid treatment device 12. In the illustrated embodiment, these features include tongues 20,21 (Fig. 4) insertable into slits in the jug 1, specifically slits in the structure 11 defining the seat. In the illustrated embodiment, the tongues 20,21 are wedge-shaped with an undercut to provide a shape-lock. Alternative co-operating features providing a shape-lock are possible.

Because the lid 13 need not be removed to fill the first vessel interior space 6, the planar liquid treatment device 12 can remain in place until the end of its useful lifetime has been reached.

The second compartment is, at least in use, partitioned into a second vessel interior space 22 and a section 23 for accommodating a liquid treatment medium by a liquid-permeable wall 24 of a removable component 25.

In a first embodiment (Figs. 1, 2), the removable component 25 comprises essentially only the liquid-permeable wall 24. The liquid-permeable wall 24 is, as in the other embodiments to be discussed below, a self-supporting shape-stable structure provided with through-going apertures. In the first embodiment, the through going apertures are provided across the lateral extent of the liquid-permeable wall 24. In the first embodiment, the liquid-permeable wall 24 is provided with an upturned edge 26 (Fig. 2) along its circumference for engaging an interior surface of the side wall 4 bounding the second interior space 22 and the section 23. The upturned edge 26 may provide a friction-fit to hold the removable component 25 in place. The interior surface of the side wall 4 bounding the (second) compartment of which the second interior space 22 and the section 23 are a part may slope so as to taper towards the base 3 of the vessel and thereby approximately define the operative position of the removable component 25. When in position, the removable component 25 closes the opening between the second interior space 22 and the section 23.

The removable component 25 further includes a protruding grip 27 for retracting the removable component 25 from the second interior space 22, in this example through the second mouth 9, i.e. the mouth at a top of the vessel compartment of which the second interior space 22 is a part. The protruding grip 27 is dome-shaped and bulges outwards away from the section 23. Thus, gases can accumulate in the space defined by the dome-shaped protruding grip 27.

The section 23 is arranged to receive the liquid treatment medium. The liquid treatment medium includes at least one liquid treatment medium for the treatment of liquid in a diffusive process. This may include in particular a liquid treatment medium for the treatment of liquid by sorption, for present pu r-poses including ion exchange. Because the section 23 is arranged beneath the second vessel interior space 22 and separated therefrom by the liquid-permeable wall 24, treatment continues even for the liquid that is in the second vessel interior space 22. A concentration gradient will transport to the treatment medium those dissolved components that the liquid treatment medium is configured to remove. Those the liquid treatment medium is configured to release will be transported away from the liquid treatment medium into the second vessel interior space 22.

In a particular embodiment, the liquid treatment medium includes ion exchange resin. The ion exchange resin may include cation exchange resin, e.g. weakly acidic cation exchange resin. At least in a state prior to contact with liquid, the majority (in terms of the available treatment capacity as defined e.g. by DIN 54403) of the ion exchange resin may be in the hydrogen form. A minority may be loaded with one or more other cation species such as potassium, sodium, magnesium or lithium, to regulate the pH of the treated liquid.

In a particular embodiment, the planar liquid treatment device 12 includes material for adsorbing organic compounds and the liquid treatment medium in the section 23 includes a polymer ion exchange material. Polymer ion exchange materials with useable volumetric capacity generally have a large number of functional groups in one chain. The charged groups are hydrophilic in character. To prevent the polymer material from dissolving in water, the polymer ion exchange materials are cross-linked polymer ion exchange materials. In the process of manufacturing them, a relatively large amount of cross-linking compound is often used in orderto ensure an adequate degree of cross-linking. Moreover, the cross-linking compound is often impure. Thus, organic compounds generally remain in the ion exchange polymer material and are difficult to remove by rinsing, but perceptible in water treated with the ion exchange material. The planar liquid treatment device 12 will remove such compounds just before the liquid is poured from the jug 1.

In an embodiment, the liquid treatment medium is a bed of loose, e.g. granular matter. The apertures in the liquid-permeable wall 24 are then sized to retain the loose matter. The liquid-permeable wall 24 functions to keep the bed in a sufficiently dense state to counter channelling.

In embodiments, the liquid treatment medium comprises reticulated matter, i.e. loosely bound granular or fibrous matter, in the shape of a porous foam. Such reticulated foam can be compressed slightly, e.g. to place the reticulated foam in the section 23 or pass the reticulated foam into the second vessel interior space 22, and then expands to fill the section 23. An example of such reticulated foam is disclosed at https://cuzn.com/home/unique/, accessed on 26 September 2018.

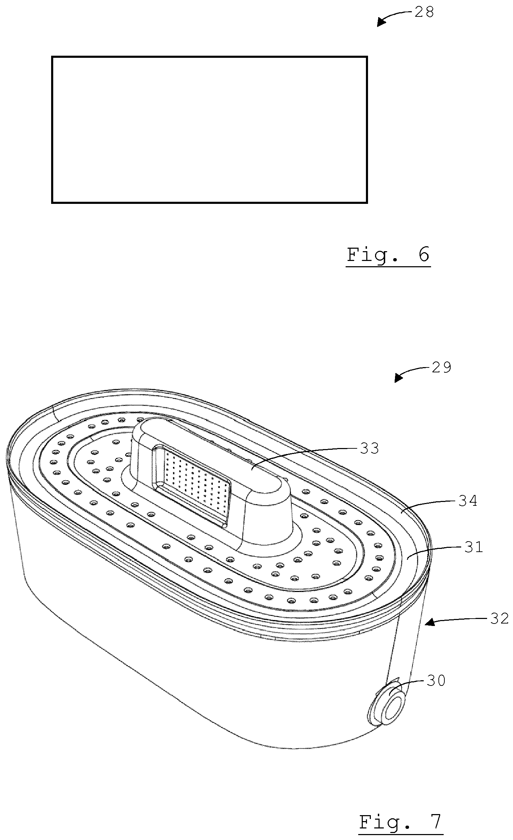

In an embodiment, the liquid treatment medium is contained in a replaceable liquid treatment cartridge in the form of a pouch 28 (Figs. 5, 6) made at least partly of liquid-permeable sheet material. This may be a liquid-permeable foil. Alternatively, the liquid-permeable sheet material may be fabric, woven or non-woven. The pouch 28 of the example is shaped to fit the section 23. The pouch 28 allows for easier replacement of the liquid treatment medium. The pouch 28 can simply be tipped out of the jug 1 at the end of its useful lifetime. The flexible nature of the sheet material allows for some deformation to facilitate placement at the bottom of the second compartment of the jug 1. The liquid treatment medium in the pouch 28 may be formed by loose matter or reticulated foam, as in the other embodiment.

An alternative component 29 (Fig. 7) is itself shaped as a cartridge containing the liquid treatment medium. This component 29 includes a housing arranged to close the passage 8 by means of a hollow stub 30 insertable into the passage 8 and forming an inlet into a chamber defined in the housing. A liquid-permeable wall 31 of similar configuration to the liquid-permeable wall 24 of the first embodiment is part of this housing. The apertures defined in the liquid-permeable wall 31 form the outlets. The housing further includes a vessel-shaped component 32 including the hollow stub 30. The housing defines a chamber in which the liquid treatment medium is arranged. The liquid treatment medium may be of the types described above.

In this embodiment, the liquid-permeable wall 31, which again comprises a dome-shaped part 33 and an upturned edge 34 is permanently fixed to the vessel-shaped component 32. With respect to an, in use, upright central axis (not shown), the liquid-permeable wall 31 is at one axial end of the housing and a bottom wall of the vessel-shaped component 32 is located at an opposite axial end of the housing.

The vessel-shaped component 32 comprises a side wall. The hollow stub 30 is formed in the side wall on one side of the removable component 29, at a lower (axial) end of the housing. The outlet apertures in the liquid-permeable wall 31 are, however, not only located on an opposite side of the housing to the hollow stub 30, but distributed across the lateral extent of the liquid-permeable wall 31. This makes the liquid-permeable wall 31 easy to manufacture and means the liquid-permeable wall 31 cannot be placed on the vessel-shaped component 32 the wrong way around during manufacturing. Also, continued treatment of the liquid in the second vessel interior space 22 by means of a diffusive process is facilitated. However, some of the liquid will flow along a relatively short path through an interior of the removable component 29. A stagnation zone will be formed at a lower axial end of the interior on an opposite side to the hollow stub 30.

In another embodiment, a vessel-shaped component 32 defining the section is permanently arranged in the jug 1. The vessel-shaped component 32 includes a hollow stub 30 insertable into the passage 8 and defining an inlet into the section. The vessel-shaped component 32 is open at a mouth closable by the liquid-permeable wall 31, which again forms the removable component. The liquid treatment medium may be of the types described above in relation to the first embodiment. The liquid-permeable wall 31 has essentially the same configuration as the liquid-permeable wall 24 of the first embodiment.

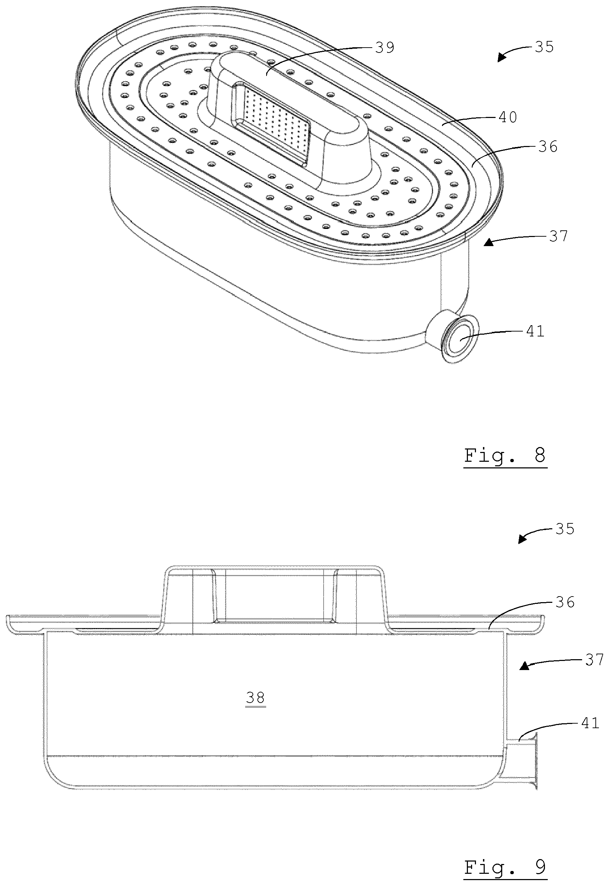

An alternative to the component 29 (Fig. 7) shaped as a cartridge, which alternative is also shaped as a cartridge 35 (Figs. 8, 9), has a corresponding housing. That is to say, that this cartridge 35 has a liquid-permeable wall 36 forming a lid closing a vessel-shaped housing component 37 to define a chamber 38 corresponding to the section for accommodating the liquid treatment medium. The liquid treatment medium may be as discussed above.

The liquid-permeable wall 36 is essentially identical to the liquid-permeable wall 31 of the removable component 29 discussed with reference to Fig. 7. In particular, it has a dome-shaped part 39 and an upturned edge 40. Outlet apertures are located in a section of the liquid-permeable wall 36 located between the dome-shaped part 39 and the upturned edge 40.

The vessel-shaped housing component 37 has slightly smaller lateral dimensions. A hollow stub 41 serves as a liquid inlet, but does not extend laterally beyond a lateral edge of the liquid-permeable wall 36. This makes it easier to move the cartridge 35 into position.

The hollow stub 41 is provided with a sealing surface at a free end of the hollow stub 41. Thus, the hollow stub 41 need not be inserted into the passage 8. Instead, the sealing surface is arranged to engage a surface of the partitioning wall 5 around a mouth of the passage 8.

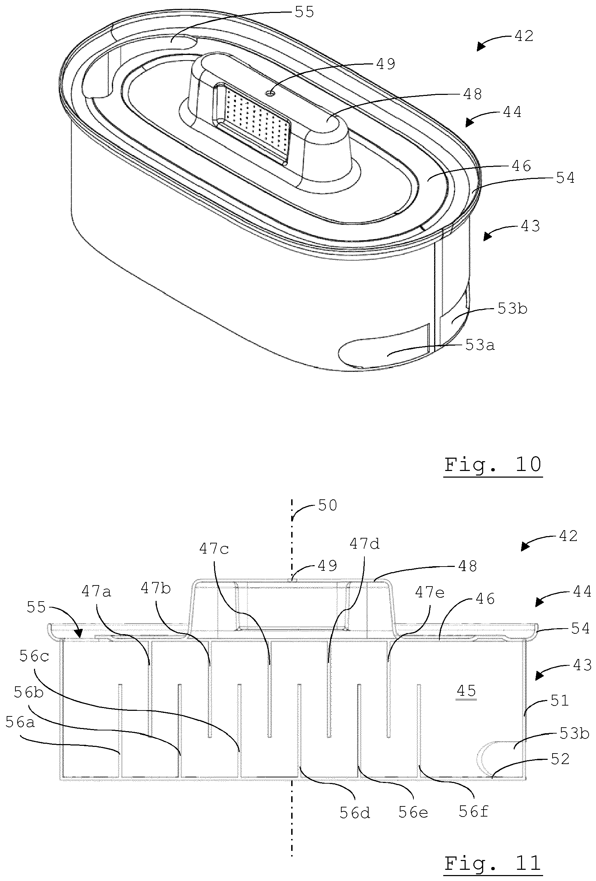

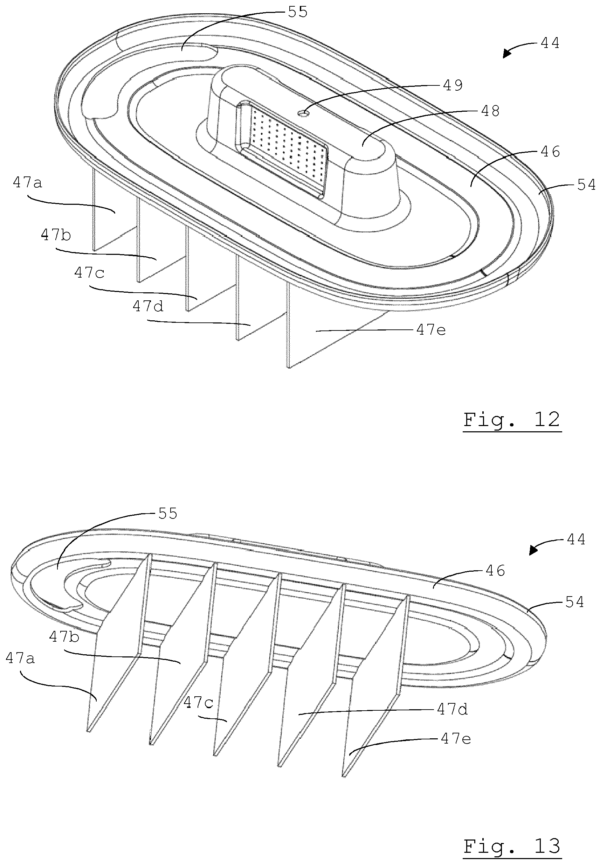

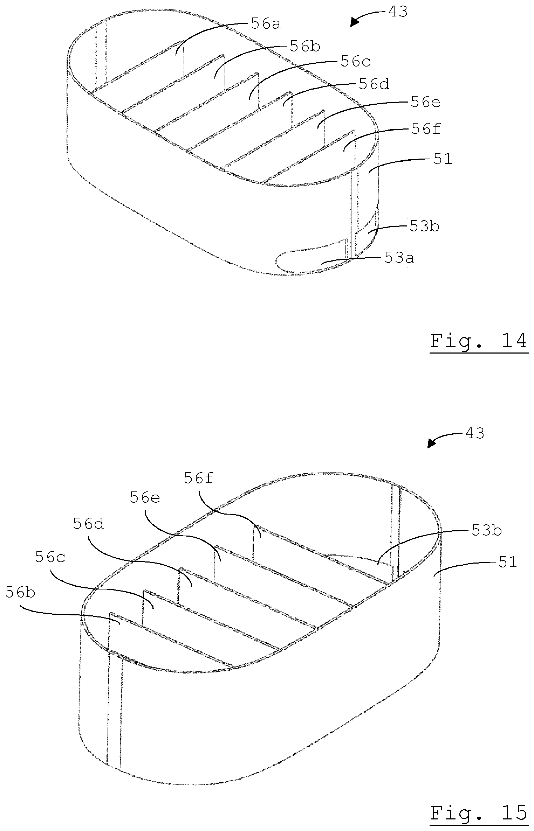

A third cartridge 42 (Figs. 10-15) has a housing adapted to prolong the contact time of the liquid with the liquid treatment medium and to prevent the forming of substantial stagnation zones. In this embodiment, the cartridge housing comprises a vessel-shaped housing component 43 and a housing lid 44, together defining a chamber 45 for accommodating one or more liquid treatment media of the types discussed previously.

A liquid-permeable wall 46 and, in use upper, baffles 47a-e are integral parts of the housing lid 44.

The liquid-permeable wall 46 comprises a central dome-shaped part 48. A venting aperture 49 is provided at an apex of the dome-shaped part 48. The dome-shaped part 48 also functions as a protruding grip allowing a user to handle the third cartridge 42, in particular remove the third cartridge 42 from the jug 1.

It is possible to define a central, in use upright, axis 50 of the cartridge housing (Fig. 11). The liquid-permeable wall 46 extends essentially perpendicularly to this central axis 50.

The vessel-shaped housing component 43 comprises a side wall 51 and an, in this example essentially liquid-impermeable, bottom wall 52. The bottom wall 52 is located at an opposite axial end of the third cartridge 42 to the liquid-permeable wall 46. In this example, two inlet apertures 53a,b are formed in the side wall 51 where the side wall 51 adjoins the bottom wall 52. In an alternative embodiment, the inlet apertures 53a,b may extend partially into the bottom wall 52. In an alternative embodiment, there may be only a single inlet aperture 53. The inlet apertures 53a,b are covered on the inside of the cartridge housing by liquid-pervious sheet material (not shown), e.g. a mesh. In another embodiment, there may be one or more grilles or apertures formed in the side wall 51 to define liquid inlet apertures smaller than a particle size of any granular media contained in the third cartridge 42.

It will be apparent that the cartridge housing has an elongated shape, seen from the top, and that the inlet apertures 53a,b are provided at only one longitudinal end.

Because the liquid-permeable wall 46 is provided with an upturned edge 54 along its circumference for engaging an interior surface of the side wall 4 bounding the second interior space 22 and the section 23, the inlet apertures 53a,b need not be placed in sealed liquid communication with the passage 8 by the side wall 51 of the vessel-shaped housing component 43 or features provided on the vessel-shaped housing component 43.

On an opposite longitudinal side to the inlet apertures 53a,b, close to a rim of the liquid-permeable wall 46, a liquid outlet aperture 55 is defined in the liquid-permeable wall 46. In an alternative embodiment, there may be more than one outlet aperture 55. However, they would all be provided only on an opposite side of the housing to the inlet apertures 53a,b, so that the liquid cannot take a shortcut from the inlet apertures 53a,b through the third cartridge 42.

The outlet aperture 55 is covered on the inside of the cartridge housing by liquid-pervious sheet material (not shown), e.g. a mesh. In another embodiment, there may be one or more grilles or apertures formed in the liquid-permeable wall to define outlet apertures smaller than a particle size of any granular media contained in the third cartridge 42.

The vessel-shaped housing component 43 is also provided with integrally formed, in use lower, baffles 56a-f. The lower baffles 56a-f adjoin and extend in axial direction (with respect to the central axis 50) from the bottom wall 52. The lower baffles 56a-f extend axially (upwards) to an axial level below a level of an axial edge of the side wall 51. The lower baffles 56a-f also adjoin an inside surface of the side wall 51 along opposite lateral edges of the lower baffles 56a-f. Thus, liquid can only flow past a free axial edge of each lower baffle 56a-f, just like the liquid can only flow past a free axial edge of the upper baffles 47a-e. As a result, a meandering flow path is defined between the inlet apertures 53a,b and the outlet aperture 55.

To manufacture the third cartridge 42, the vessel-shaped housing component 43 is filled with granular liquid treatment medium of any of the types described above. The vessel-shaped housing component 43 is then closed by bonding the housing lid 44 to the vessel-shaped housing component 43. The upper baffles 47a-e have to be pressed into the liquid treatment medium to fit the housing lid 44 onto the vessel-shaped housing component 43. One or both components 43,44 may be vibrated to facilitate this.

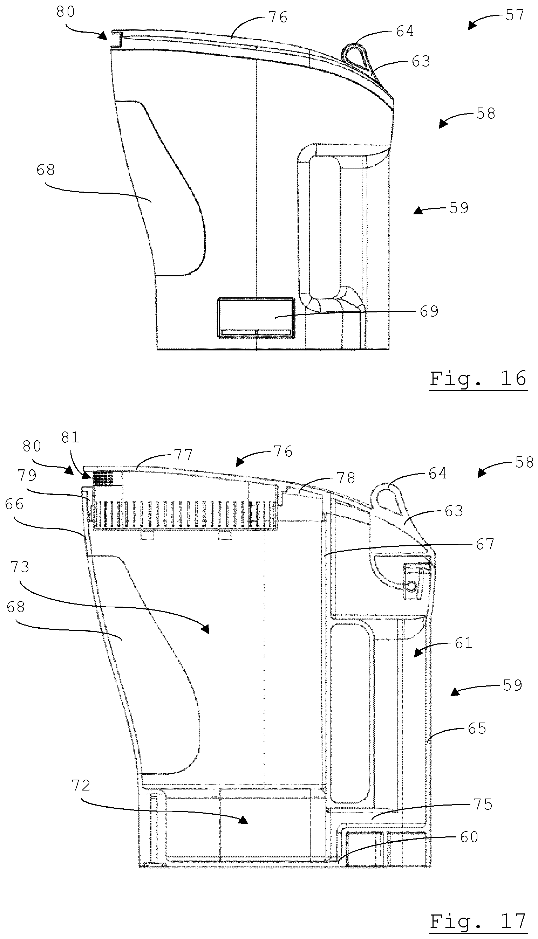

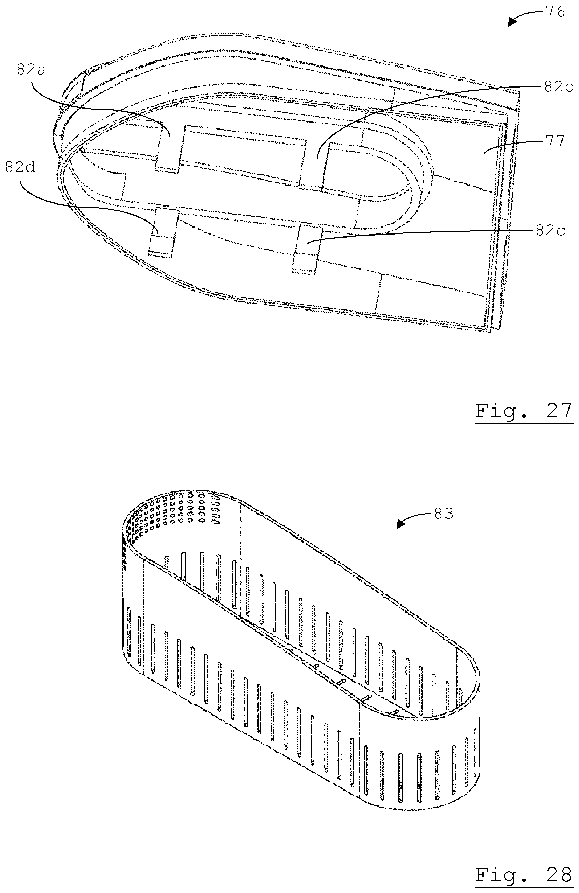

A second device 57 for forming a liquid treatment system (Figs. 16-29) comprises a single portable vessel in the shape of a jug 58 having a handle 59. The jug 58 has a base 60 for placement on a horizontal support surface to define an upright orientation of the jug 58.

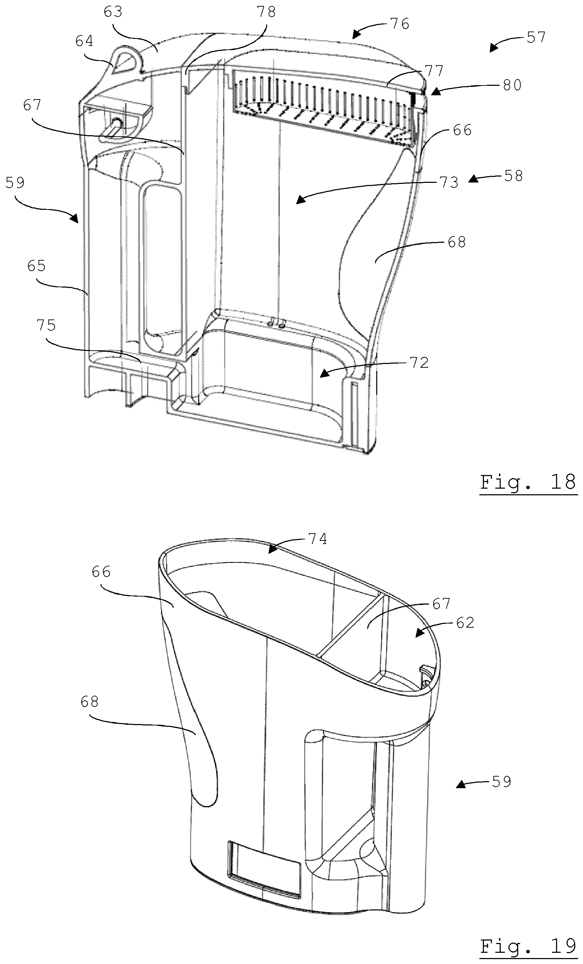

Two separate compartments are defined in the jug 58. A first compartment corresponds to a first vessel interior space 61. In the illustrated embodiment, the first vessel interior space 61 is at least partly defined in the handle 59. The first vessel interior space 61 is open at a first mouth 62 (Fig. 19) provided at a top of the jug 58 opposite the base 60. The first mouth 62 allows the first vessel interior space 61 to be filled with liquid to be treated, e.g. by holding the first mouth 62 under a water tap. The first mouth 62 thus forms a fill opening.

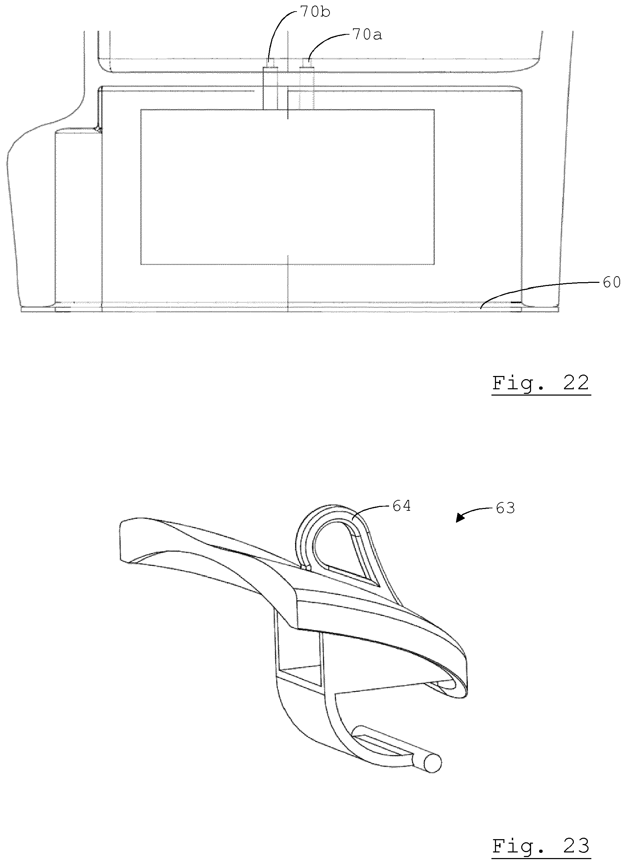

The first mouth 62 can be individually opened and closed by a pivotably arranged closure part 63 (Fig. 23). A protruding engagement part 64 is positioned for engagement by a finger or thumb of the hand of holding the jug 58 by the handle 59. Thus, one-handed movement of the closure part 63 between an open and closed position is made possible.

At least a handle wall 65, a side wall section 66 of the jug 58 and a partitioning wall 67 partition the jug 58 into the two compartments. These walls 65-67 may be integral parts of a single body. The body may, for example be obtainable by moulding two shell halves that are bonded (adhesively or by welding for example) together to form the body. The body may be made of plastic, e.g. polypropylene. The handle 59 may comprise an over-moulded section (not shown) made of a different material in order to provide different haptic properties, e.g. better grip.

In the illustrated embodiment, a viewing window 68 made of transparent or at least translucent material is defined in the jug 58. This material is a different material to that of the body of the jug 58 and closes an opening defined in the side wall section 66, which may be opaque.

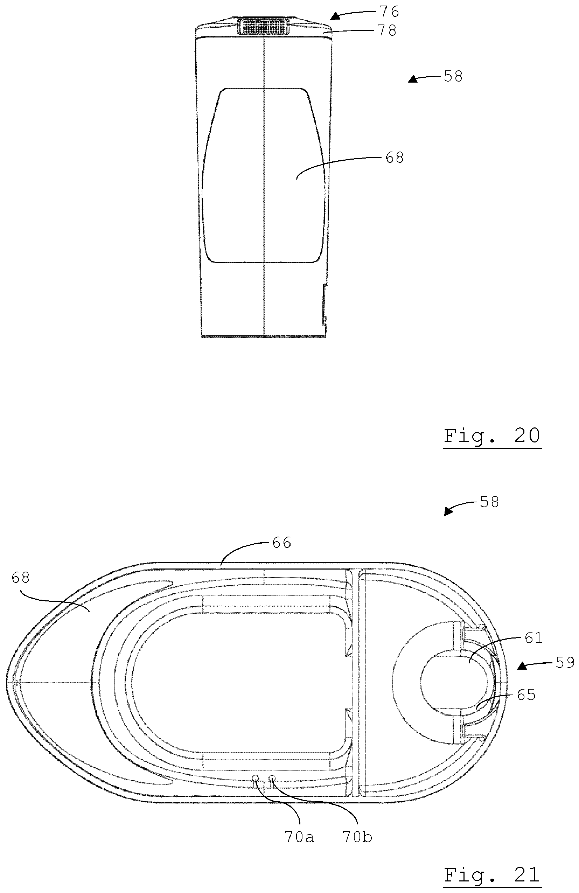

The side wall section 66 also defines a recess for receiving a display module 69 (Fig. 16). The display module 69 includes a lifetime indicator for alerting a user to the need to replace at least one liquid treatment medium. In the illustrated embodiment, the lifetime indicator includes a device for determining a concentration of at least one dissolved substance in treated liquid contained in the jug 58. In the illustrated embodiment, this device includes a pair of electrodes 70a,b (Figs. 21 and 22) for measuring electrical conductivity. In alternative embodiments, the device may include an ion-specific sensor. The lifetime indicator may additionally or alternatively monitor the time elapsed since a last replacement of the liquid treatment medium. The lifetime indicator may alternatively or additionally be configured to obtain a measure of treated volume.

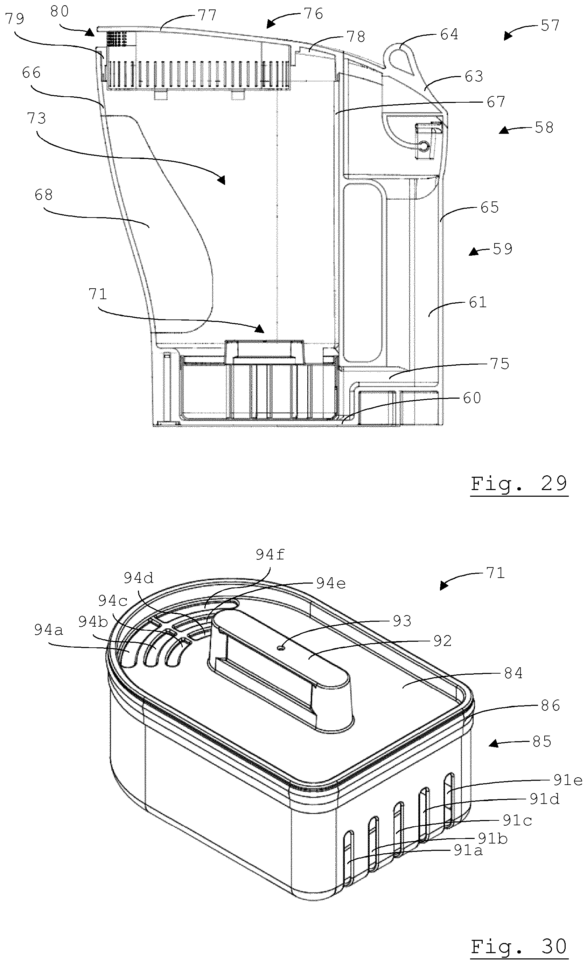

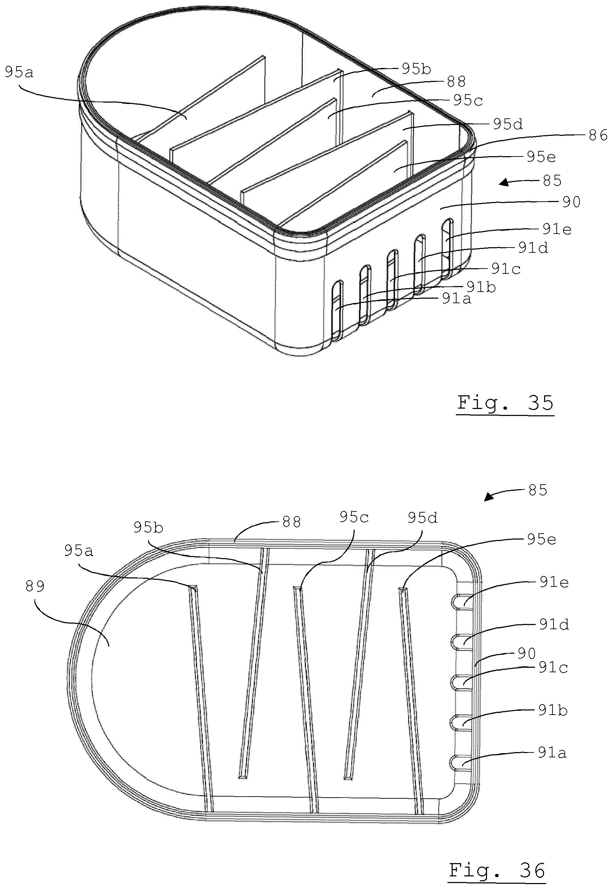

A fourth liquid treatment cartridge 71 (Figs. 30-35) is, in use, accommodated in the second compartment, which can be regarded as comprising a section 72 for accommodating the fourth liquid treatment cartridge 71 and a section forming a second interior vessel space 73. The section 72 for accommodating the fourth liquid treatment cartridge 71 is located below the second interior vessel space 73 when the jug 58 is placed with its base 60 on a horizontal support surface.

The second compartment extends from the base 3 to a second mouth 74 (Fig. 19) provided at a top of the jug 1. The second mouth 74 has a perimeter formed along at least part of its length by a main rim, the upper edge of the side wall section 66. The remainder of the perimeter is defined by the upper edge of the partitioning wall 67.

A passage 75 (Figs. 17, 18 and 29) provides for liquid communication between the first compartment and the second compartment. In an embodiment, a non-return valve (not shown) may be provided in the passage 75. Additionally or alternatively, a screen (not shown) may be provided in the passage 75.

The first and second compartment form communicating vessels due to the passage 75. The first vessel interior space 61 has a smaller volume than the second vessel interior space 73, e.g. a volume in the range of 60-90 % of the combined volume of the first vessel interior space 61 and second vessel interior space 73.

The illustrated jug 58 is further provided with a lid 76 for closing the second mouth 74. The lid 76 is removable. The lid 76 comprises a top wall 77 and a side wall 78. The side wall 78 has a shape and dimensions corresponding to the perimeter of the second mouth 74, such that the lid 76 can rest on the upper edge of the side wall section 66 and the upper edge of the partitioning wall 67, i.e. the upper edges of the walls defining the second mouth 74. A skirt 79 depends from the side wall 78. The skirt 79 is shaped to fit and engage the inside of the second mouth 74. In the illustrated embodiment, the skirt 79 is provided with a sealing part, e.g. an overmoulded sealing part.

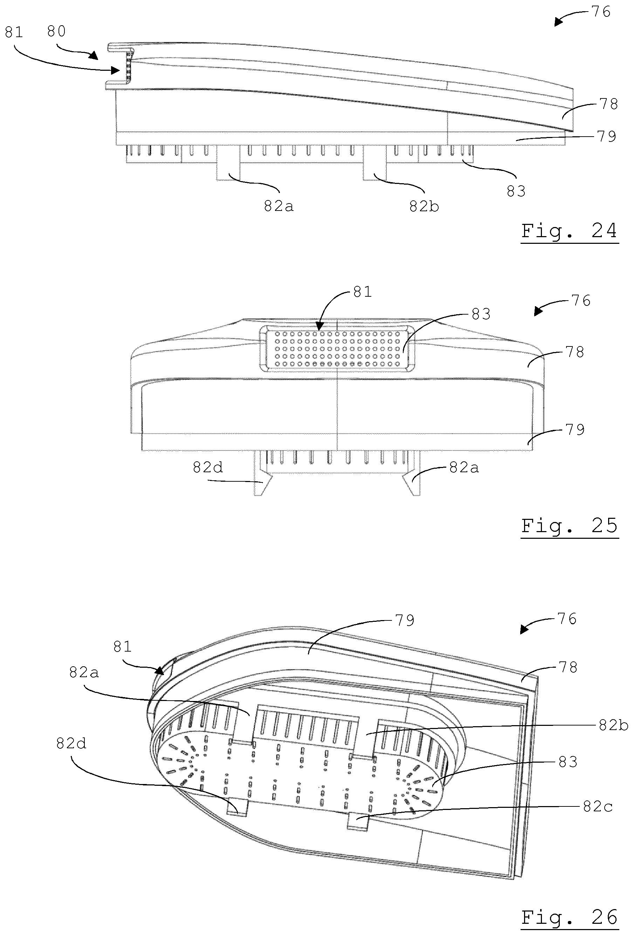

A pouring spout 80 with a pouring opening 81 is defined in the side wall 78 of the lid 76. The top wall 77 extends to form an overhang underneath which the pouring spout 80 is situated (Fig. 24). The pouring spout 80 allows liquid to be poured from the second vessel interior space 73.

The lid 76 is provided with four pawls 82a-d for engaging a vessel-shaped container 83 provided with liquid-permeable apertures in a bottom wall and side wall thereof. The vessel-shaped container 83 is open at the top, but closed by the top wall 77 of the lid 76 when mounted to the lid 76. The pawls 82a-d are arranged to engage the vessel-shaped container 83 by hooking behind an edge between the bottom wall and side wall of the vessel-shaped container 83 to lock the vessel-shaped container 83 reversibly to the lid 76. Other types of reversible locking devices are conceivable.

An exterior surface of a side wall of the vessel-shaped container 83 conforms to an interior surface of the side wall 78 of the lid 76, at least around the pouring opening 81. The locking devices of the lid 76 position the vessel-shaped container 83 against the interior surface of the side wall 78 of the lid 76. Apertures in the vessel-shaped container are aligned with the pouring opening 81 in that position, so that liquid is forced to flow from the second vessel interior space 73 to the pouring opening 81 through the vessel-shaped container 83 without being able to bypass the latter.

The vessel-shaped container 83 of the illustrated embodiment can be filled with liquid treatment medium by a user. The liquid treatment medium may in particular include a flavouring substancethat is dissolved in liquid passing through the vessel-shaped container 83 on its way to the pouring opening 81.

The vessel-shaped container 83 may be made of plastic or metal, e.g. stainless steel.

The fourth liquid treatment cartridge 71 comprises a housing comprising a liquid-permeable top wall 84, which forms a lid of the cartridge 71. The housing further comprises a vessel-shaped housing component 85 and a sealing rim 86.

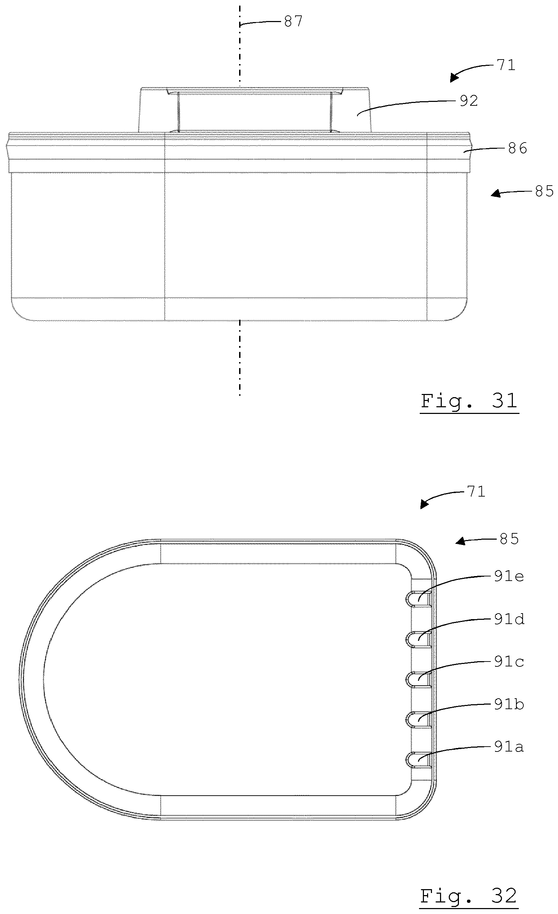

It is convenient to define an, in use, upright, central axis 87 of the housing of the fourth cartridge 71 (Fig. 31). The liquid-permeable wall 84 extends essentially perpendicularly to this axis 87.

The vessel-shaped housing component 85 comprises a side wall 88 and a bottom wall 89. The bottom wall 89 is located at an opposite axial end of the fourth cartridge 71 to the liquid-permeable wall 84.

In this example, the side wall 88 comprises an essentially planar section 90, in which a series of inlet apertures 91a-e are formed. In the illustrated embodiment, the inlet apertures 91a-e extend partially into the bottom wall 89. In an alternative embodiment, there may be only a single inlet aperture 91. The inlet apertures 91a-e are covered on the inside of the cartridge housing by liquid-pervious sheet material (not shown), e.g. a mesh. In another embodiment, there may be one or more grilles or apertures formed in the side wall 88 to define liquid inlet apertures smaller than a particle size of any granular media contained in the fourth cartridge 71.

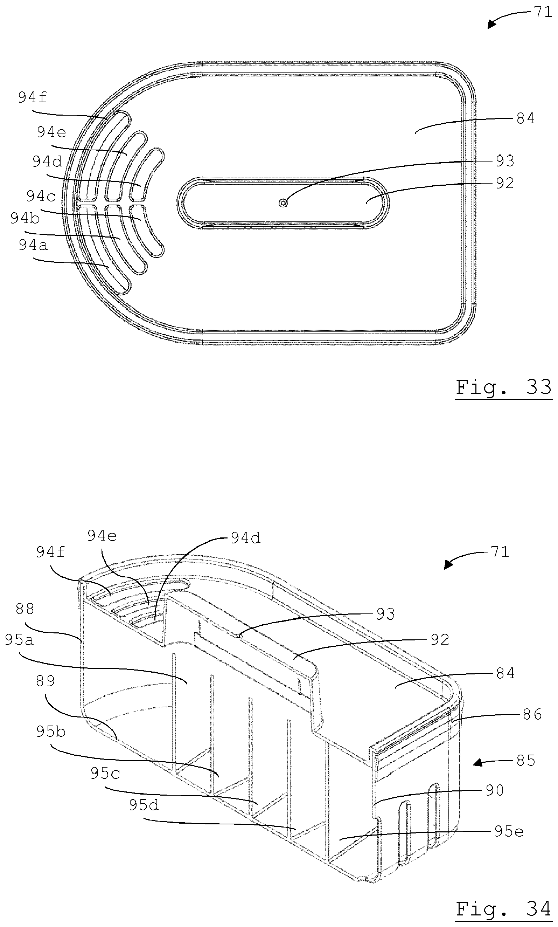

It will be apparent that the cartridge housing has an elongated shape, seen from the top (Fig. 33). The inlet apertures 91a-e are provided at only one longitudinal end.

The sealing rim 86 is arranged to engage a sealing surface of a cartridge seat defined in the jug 58. Thus, liquid emerging from the passage 75 is forced to flow through the cartridge 71, in use. The inlet apertures 91a-e need not individually be placed in sealed liquid communication with the passage 75 by the side wall 88 of the vessel-shaped housing component 85 or features provided on the vessel-shaped housing component 85.

As is the case in the other embodiments, the liquid-permeable wall 84 comprises a central dome-shaped part 92. A venting aperture 93 is provided at an apex of the dome-shaped part 92. The dome-shaped part 92 also functions as a protruding grip allowing a user to handle the fourth cartridge 71, in particular remove the fourth cartridge 71 from the jug 58.

On an opposite side of a plane through the cartridge axis 87 to that on which the inlet apertures 91a-e are provided, liquid outlet apertures 94a-f are defined in the liquid-permeable wall 84. In an alternative embodiment, there may be only one or at least a different number of outlet apertures 94a-f. However, they would still all be provided only on an opposite side of the housing to the inlet apertures 91a-e, so that the liquid cannot take a shortcut from the inlet apertures 91a-e through the fourth cartridge 71.

The outlet apertures 94a-f are covered on the inside of the cartridge housing by liquid-pervious sheet material (not shown), e.g. a mesh. In another embodiment, there may be one or more grilles or apertures formed in the liquid-permeable wall 84 to define outlet apertures smaller than a particle size of any granular media contained in the fourth cartridge 71.

The vessel-shaped housing component 85 is also provided with integrally formed baffles 95a-e. The baffles 95a-e extend from an interior surface of the side wall 88 of the vessel-shaped housing component 85, and they do so alternately from opposite sides of the vessel-shaped housing component 85. They extend only so far that a leading lateral edge remains separated from the interior surface of the side wall 88, so that liquid can flow around this edge, in use. A bottom edge of each baffle 95a-e adjoins the interior surface of the bottom wall 89 of the vessel-shaped housing component 85. As a result, a meandering flow path is defined between the inlet apertures 91a-e and the outlet apertures 94 a-f.

To manufacture the fourth cartridge 71, the vessel-shaped housing component 85 is filled with granular liquid treatment medium of any of the types described above. The vessel-shaped housing component85 is then closed by bonding the liquid-permeable wall 84 to the vessel-shaped housing component 85.

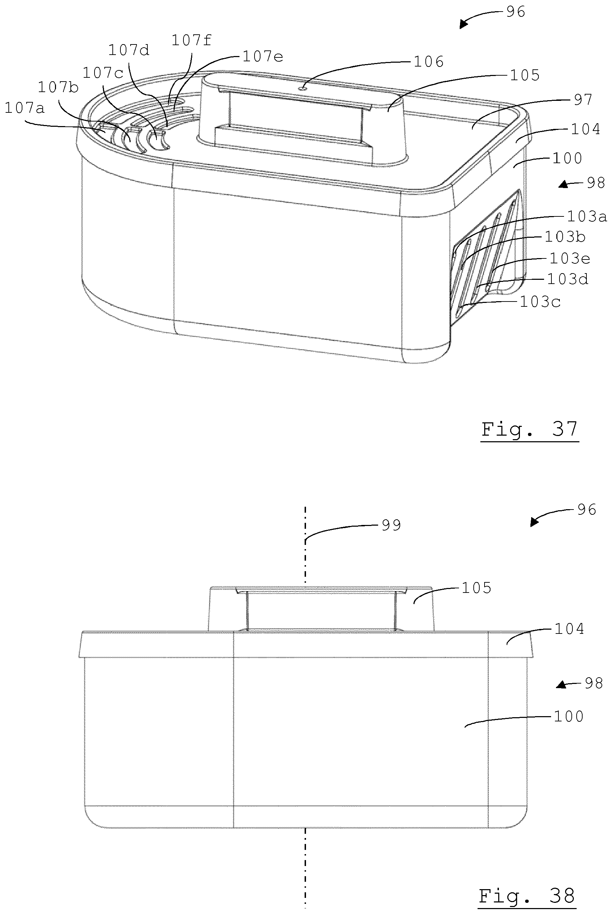

A fifth liquid treatment cartridge 96 (Figs. 37-41) for the second device 57 for forming a liquid treatment system is very similar to the fourth liquid treatment cartridge 71. However, it does not include a separate sealing rim 86 and thus has fewer parts.

The fifth liquid treatment cartridge 96 comprises a housing comprising a liquid-permeable top wall 97, which forms a lid of the cartridge 96. The housing further comprises a vessel-shaped housing component 98.

It is convenient to define an, in use upright, central axis 99 of the housing of the fifth cartridge 96 (Fig. 38). The liquid-permeable wall 97 extends essentially perpendicularly to this axis 99.

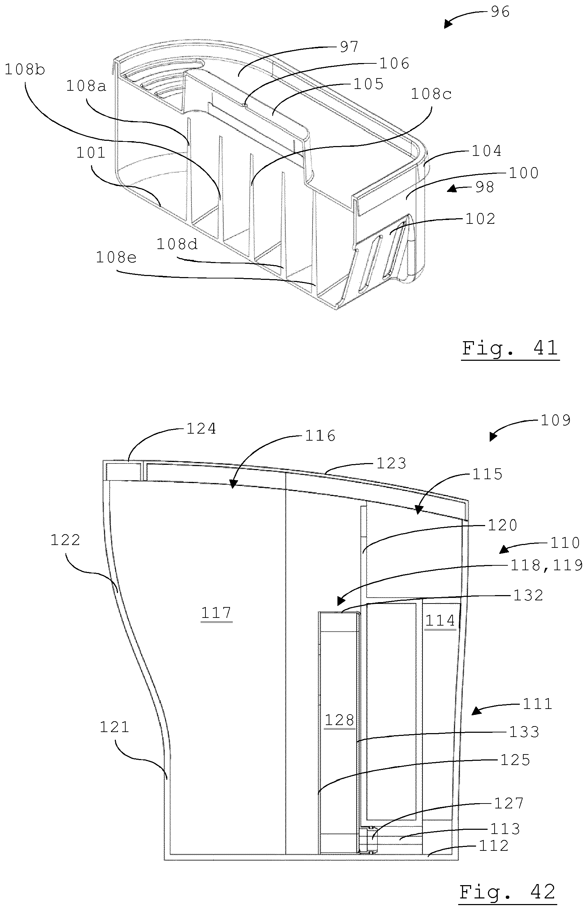

The vessel-shaped housing component 98 comprises a side wall 100 and a bottom wall 101 (Fig. 41). The bottom wall 101 is located at an opposite axial end of the fifth liquid treatment cartridge 96 to the liquid-permeable wall 97.

In this example, the side wall 100 comprises an essentially planar section 102, in which a series of inlet apertures 103a-e are formed. In the illustrated embodiment, the planar section 102 is inclined, so that the inlet apertures 103a-e are relatively long without needing to extend partially into the bottom wall 101. In alternative embodiments, there may be fewer inlet apertures 103, which may be larger. The inlet apertures 103a-e are covered on the inside of the cartridge housing by liquid-pervious sheet material (not shown), e.g. a mesh. In another embodiment, there may be one or more grilles or apertures formed in the side wall 100 to define liquid inlet apertures smaller than a particle size of any granular media contained in the fifth liquid treatment cartridge 96.

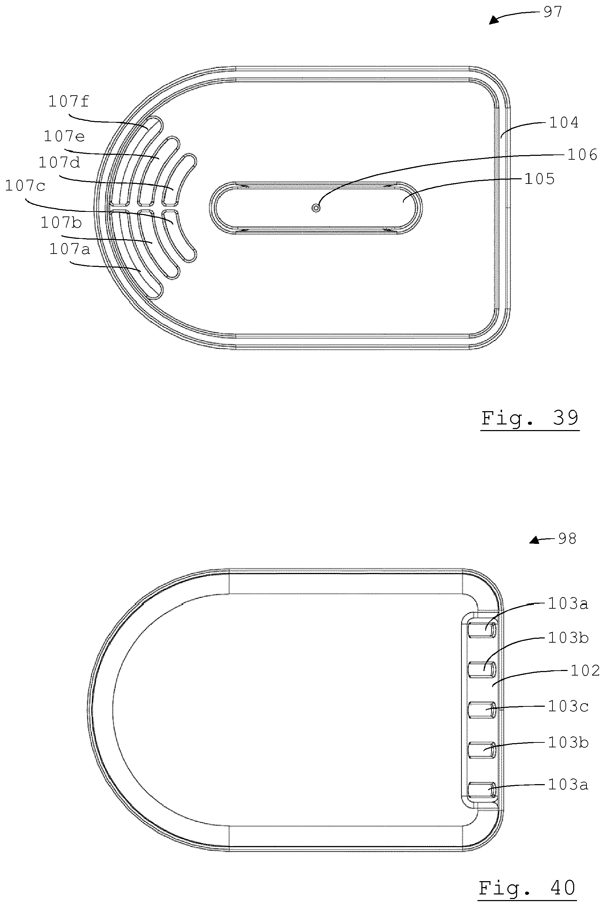

It will be apparent that the cartridge housing has an elongated shape, seen from the top (Fig. 39). The inlet apertures 103a-e are provided at only one longitudinal end.

The liquid-permeable top wall 97 of the fifth liquid treatment cartridge 96 includes an edge section turned down towards the vessel-shaped housing component 98. This section forms a sealing rim 104 integral to the liquid-permeable top wall 97. The sealing rim 104 is arranged to engage a sealing surface of a cartridge seat defined in the jug 58. Thus, liquid emerging from the passage 75 is forced to flow through the cartridge 96, in use. The inlet apertures 103a-e need not individually be placed in sealed liquid communication with the passage 75 by the side wall 100 of the vessel-shaped housing component 98 or features provided on the vessel-shaped housing component 98.

The liquid-permeable wall 97 comprises a central dome-shaped part 105. A venting aperture 106 is provided at an apex of the dome-shaped part 105. The dome-shaped part 105 also functions as a protruding grip allowing a user to handle the fifth liquid treatment cartridge 96, in particular remove the fifth liquid treatment cartridge 96 from the jug 58.

On an opposite side of a plane through the cartridge axis 99 to that on which the inlet apertures 103a-e are provided, liquid outlet apertures 107a-f are defined in the liquid-permeable wall 97. In an alternative embodiment, there may be only one or at least a different number of outlet apertures 107a-f. However, they would still all be provided only on an opposite side of the housing to the inlet apertures 103a-e, so that the liquid cannot take a shortcut from the inlet apertures 103a-e through the fifth liquid treatment cartridge 96.

The outlet apertures 107a-f are covered on the inside of the cartridge housing by liquid-pervious sheet material (not shown), e.g. a mesh. In another embodiment, there may be one or more grilles or apertures formed in the liquid-permeable wall 97 to define outlet apertures smaller than a particle size of any granular media contained in the fifth liquid treatment cartridge 96.

The vessel-shaped housing component 98 is also provided with integrally formed baffles 108a-e (Fig. 41). The baffles 108a-e extend from an interior surface of the side wall 100 of the vessel-shaped housing component 98, and they do so alternately from opposite sides of the vessel-shaped housing component 98. They extend only so far that a leading lateral edge remains separated from the interior surface of the side wall 100, so that liquid can flow around this edge, in use. A bottom edge of each baffle 108a-e adjoins the interior surface of the bottom wall 101 of the vessel-shaped housing component 98. As a result, a meandering flow path is defined between the inlet apertures 103a-e and the outlet apertures 107 a-f.

To manufacture the fifth liquid treatment cartridge 96, the vessel-shaped housing component 98 is filled with granular liquid treatment medium of any of the types described above. The vessel-shaped housing component 98 is then closed by bonding the liquid-permeable wall 97 to the vessel-shaped housing component98.

A third device 109 for forming a liquid treatment system (Figs. 42-44) also comprises a single portable vessel in the shape of a jug 110. The jug 110 comprises a handle 111. The jug 110 has a base 112 for placement on a horizontal support surface to define an upright orientation of the jug 110.

The jug 110 is partitioned into two compartments. The two compartments are in liquid communication with each other via a passage 113. In an alternative embodiment, a non-return valve or screen (not shown) may be provided in the passage 113.

A first compartment corresponds to a first vessel interior space 114. In the illustrated embodiment, the first vessel interior space 114 is at least partly defined in the handle 111. The first vessel interior space 114 is open at a first mouth 115 at a top of the jug 110 opposite the base 112. The first mouth 115 allows the first vessel interior space 114 to be filled with liquid to be treated. The first mouth 115 thus forms a fill opening for the device 109.

A second compartment extends from the base 112 to a second, main mouth 116 opposite the base 112. The second compartment can be regarded as comprising a second vessel interior space 117 and a section 118 occupied, in use, by a sixth liquid treatment cartridge 119. The second vessel interior space 117 is for receiving treated liquid. Part of the second vessel interior space 117 is located adjacent the section 118 and part of the second vessel interior space 117 is located above the section 118 in the upright orientation of the jug 110.

A partitioning wall section 120 is provided between the first vessel interior space 114 and the second vessel interior space 117 and defines a common perimeter section of the first mouth 115 and the second mouth 116. This partitioning wall section 120 extends in a direction away from the base to a position just short of an upper edge of a side wall 121 of the jug 110. That upper edge defines a remainder of the perimeters of the first mouth 115 and the second mouth 116. As a result, liquid poured into the first vessel interior space 114 at too high a rate of flow can spill over into the second vessel interior space 117. In an alternative embodiment, this overflow feature may be dispensed with. The partitioning wall section 120 would then extend right up to an upper edge of the side wall 121.

The side wall 121 comprises a lip 122 of which an upper edge defines a lip rim coinciding with a section of a rim surrounding the second mouth 116. The lip 122 forms a pouring spout for pouring liquid from the second vessel interior space 117.

A lid 123 is provided for placement on top of the jug 110. The lid 123 at least covers the first mouth 115 and the second mouth 116. In an alternative embodiment in which the partitioning wall section 120 has no overflow feature, the lid 123 would close the first mouth 115 and the second mouth 116. In such an alternative embodiment, the lid 123 may also comprise a closure part for opening and closing the first mouth 115 independently of the second mouth 116.

In the illustrated embodiment, a pivotable spout cover 124 is part of the lid 123. The pivotable spout cover 124 swings open when the jug 110 is tipped to pour out liquid and closes the spout when the jug 110 is in the upright orientation.

Because a majority of the first vessel interior space 114 is arranged at a level at least equal to a level of the section 118 in the upright orientation of the jug 110, the first vessel interior space 114 and the second vessel interior space 117 form communicating vessels. The volume of the first vessel interior space 114 is smaller than the volume of the section 118 and the second vessel interior space 117 combined.

The sixth liquid treatment cartridge 119 is movable into its operative position through the second mouth 116 and the second vessel interior space 117.

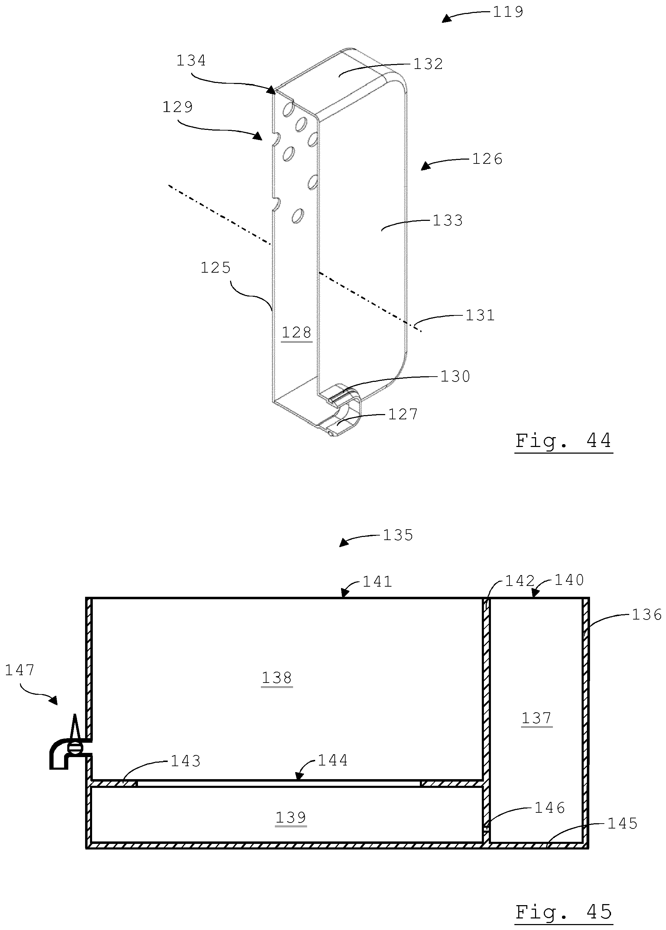

The sixth liquid treatment cartridge 119 includes a cartridge housing including a liquid-permeable wall 125 and a vessel-shaped housing component 126 (Fig. 44). The cartridge housing further includes a hollow stub 127 that functions as a liquid inlet and that is insertable into the passage 113, so as to close it. Liquid is thus forced to flow through a chamber 128 in the cartridge housing to liquid outlet apertures 129 in the liquid-permeable wall 125 when the sixth liquid treatment cartridge 119 is in the operative position. A sealing element 130 (Fig. 44) provides a seal between an exterior of the hollow stub 127 and an interior surface of the passage 113. In the illustrated embodiment, the hollow stub 127 has an elongated cross-section to increase its cross-sectional area whilst minimising the formation of stagnation zones in the chamber 128. In alternative embodiments, there may be several adjacent passages 113 and stubs 127, e.g. with a different cross-sectional shape.

The chamber 128 is filled with liquid treatment medium (not shown) that includes at least one liquid treatment medium for the treatment of liquid in a diffusive process. This may include in particular a liquid treatment medium for the treatment of liquid by sorption, for present purposes including ion exchange. In a particular embodiment, the liquid treatment medium includes ion exchange resin. The ion exchange resin may include cation exchange resin, e.g. weakly acidic cation exchange resin. At least in a state prior to contact with liquid, the majority (in terms of the available treatment capacity as defined e.g. by DIN 54403) of the ion exchange resin may be in the hydrogen form. A minority may be loaded with one or more other cation species such as potassium, sodium, magnesium or lithium, to regulate the pH of the treated liquid.

The liquid treatment medium may additionally or alternatively include activated carbon, e.g. granular activated carbon.

It is convenient to define a central axis 131 of the housing of the sixth liquid treatment cartridge 119 (Fig. 44). The liquid-permeable wall 125 extends essentially perpendicularly to this axis 131. In the illustrated embodiment, the axis 131 extends in a substantially horizontal direction in the operative position of the sixth liquid treatment cartridge 119.

The vessel-shaped housing component 126 comprises a side wall 132 and a bottom wall 133. The bottom wall 133 is located at an opposite axial end of the sixth liquid treatment cartridge 119 to the liquid-permeable wall 125. The liquid inlet, in this case defined by the hollow stub 127, is defined in this bottom wall 133. An interior aperture of the hollow stub 127 is covered on the inside of the cartridge housing by liquid-pervious sheet material (not shown), e.g. a mesh.

It will be apparent that the cartridge housing has an elongated shape, seen in axial direction and looking onto the liquid-permeable wall 125. The inlet aperture defined by the hollow stub 127 is provided at only one longitudinal end. The outlet apertures 129 are provided at only the opposite longitudinal end. In any event, the inlet aperture and outlet apertures 129 are provided on opposite sides of a plane in which the axis 131 lies and which is perpendicular to the longitudinal direction. Thus, the liquid is forced to flow along the largest dimension of the chamber 128.

The outlet apertures 129 are covered on the inside of the cartridge housing by liquid-pervious sheet material (not shown), e.g. a mesh. In another embodiment, there may be one or more grilles or apertures formed in the liquid-permeable wall 125 to define outlet apertures smaller than a particle size of any granular media in the chamber 128. Generally, the shape of the outlet apertures 129 can be varied. They may be slits, for example.

To manufacture the sixth liquid treatment cartridge 119, the vessel-shaped housing component 126 is filled with granular liquid treatment medium of any of the types described above. The vessel-shaped housing component 126 is then closed by bonding the liquid-permeable wall 125 to the vessel-shaped housing component 126.

Because the outlet apertures 129 are only provided in an, in the upright orientation of the third device 109, upper section of the liquid-permeable wall 125, at least some of the liquid that has left the sixth liquid treatment cartridge 119 cannot flow back into the first vessel interior space 114. As the jug 110 is tipped to pour out treated liquid, the first vessel interior space 114 is further emptied. The amount of untreated liquid left standing in the first vessel interior space 114 is thus kept relatively low.

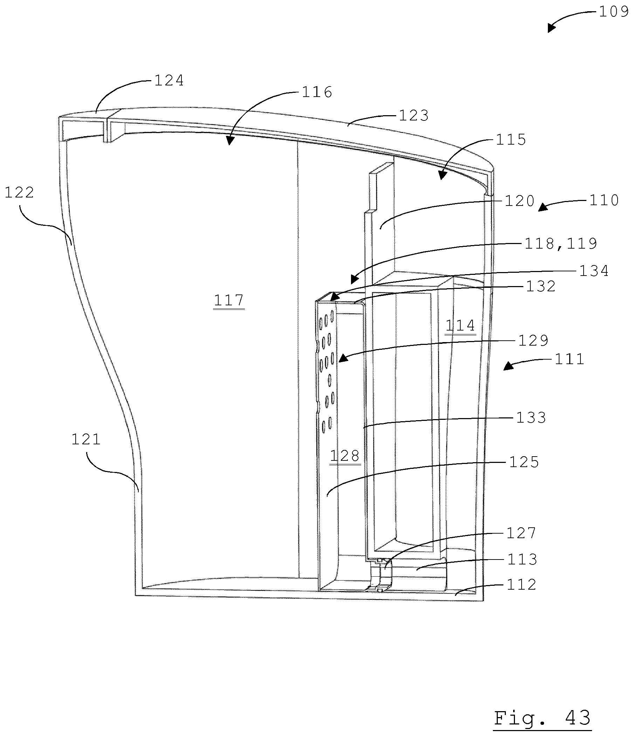

A venting aperture 134 (Figs. 43, 44) is provided in an, in user, upper section of the side wall 132.

An essentially stationary alternative device 135 (Fig. 45) for forming a liquid treatment system comprises a vessel 136 in which are defined a first vessel interior space 114, a second vessel interior space 117 and a section 118 for accommodating a liquid treatment medium. The liquid treatment medium may be of any of the types discussed above.

The first vessel interior space 114 and the second vessel interior space 117 are open at a first mouth 62 and a second mouth 116, respectively. A lid (not shown) is provided to close both mouths 115,116.

A first partitioning wall 142 separates the first vessel interior space 114 from the section 118 and the second vessel interior space 117. A second partitioning wall 143 separates the second vessel interior space 117 from the section 118, but includes an aperture 144 closable by a removable component (not shown) including a liquid-permeable wall. This component may be essentially of the same shape as the removable component 25 of the first embodiment. The removable component is movable into position through the second vessel interior space 117.

The vessel 136 has a base 112 that, when arranged horizontally, defines an upright orientation of the device 135.

As in the other embodiment, a majority (by volume) of the first vessel interior space 114 is at or above the level of the section 118 in the upright orientation of the vessel 136. A passage 113 in the first partitioning wall 142 provides for liquid communication between the first vessel interior space 114 and the second vessel interior space 117 via the section 118. The first vessel interior space 114 is fillable to a level above a level of the second partitioning wall 143. The first vessel interior space 114 has a smaller volumethan at least the volume of the second vessel interior space 117 and the section 118 combined, in particular a smaller volume than the second vessel interior space 117.

The vessel 136 is provided with a tap 147 for at least partially draining the second vessel interior space 117 of treated liquid. The tap 147 includes a handle for manipulation by a user to dispense treated liquid. In an embod i-ment, a structure defining a seat for a liquid treatment device similar to the planar liquid treatment device 12 described above in relation to the first embodiment is provided in a path of the liquid leading to the tap 147.

A user can pour liquid to be treated into the first vessel interior space 114 through the first mouth 115, which then automatically flows into the second vessel interior space 117 until the liquid levels in these spaces 114,117 are equal. The volume of liquid that can be treated can be much larger than the volume of the first vessel interior space 114. Thus, the vessel 136 is relatively compact for the volume of liquid that can be treated.

The invention is not limited to the embodiments described above, which can be varied within the scope of the accompanying claims. For example, in the fourth embodiment, a conduit may be provided for filling the first vessel interior space 114. A system including a valve and a fill level sensor may in that case be provided to stop the supply of liquid when the level in the first vessel interior space rises above a certain maximum. Also, the dispensing tap 147 may be situated at the level of the section 118, so that the treated liquid in the second vessel interior space 117 passes through the section 118 a second time before being dispensed.

The third device 109 may be provided with a structure 11 defining a seat for a planar liquid treatment device 12, as in the jug 1 of the first device. The third device 109 could also be provided with a lid like the lid 76 of the second device 57.

### List of reference numerals

- 1: - jug
- 2: - handle
- 3: - base
- 4: - side wall
- 5: - partitioning wall
- 6: - first vessel interior space
- 7: - first mouth
- 8: - passage
- 9: - second mouth
- 10: - lip
- 11: - structure defining a seat
- 12: - planar liquid treatment device
- 13: - lid
- 14: - protruding lid part
- 15: - angled edge
- 16: - main lid part
- 17: - closure part
- 18: - operating part
- 19: - depending skirt
- 20: - tongue
- 21: - tongue
- 22: - second vessel interior space
- 23: - section
- 24: - liquid-permeable wall
- 25: - removable component
- 26: - upturned edge
- 27: - grip
- 28: - pouch
- 29: - removable component
- 30: - hollow stub
- 31: - liquid-permeable wall
- 32: - vessel-shaped component
- 33: - dome-shaped part
- 34: - upturned edge
- 35: - second cartridge
- 36: - liquid-permeable wall
- 37: - vessel-shaped housing component
- 38: - chamber
- 39: - dome-shaped part
- 40: - upturned edge
- 41: - hollow stub
- 42: - third cartridge
- 43: - vessel-shaped housing component
- 44: - housing lid
- 45: - chamber
- 46: - liquid-permeable wall
- 47a-e: - upper baffles
- 48: - dome-shaped part
- 49: - venting aperture
- 50: - central axis
- 51: - side wall
- 52: - bottom wall
- 53a,b: - inlet apertures
- 54: - upturned edge
- 55: - outlet aperture
- 56a-f: - lower baffles
- 57: - second device
- 58: - jug
- 59: - handle
- 60: - base
- 61: - first vessel interior space
- 62: - first mouth
- 63: - closure part
- 64: - engagement part
- 65: - handle wall
- 66: - side wall section
- 67: - partitioning wall
- 68: - viewing window
- 69: - display module
- 70a,b: - electrodes
- 71: - fourth cartridge
- 72: - section
- 73: - second vessel interior space
- 74: - second mouth
- 75: - passage
- 76: - lid
- 77: - lid top wall
- 78: - lid side wall
- 79: - skirt
- 80: - pouring spout
- 81: - pouring opening
- 82a-d: - pawls
- 83: - vessel-shaped container
- 84: - liquid-permeable wall
- 85: - vessel-shaped housing component
- 86: - sealing rim
- 87: - cartridge axis
- 88: - side wall
- 89: - bottom wall
- 90: - planar section
- 91a-e: - inlet apertures
- 92: - dome-shaped part
- 93: - venting aperture
- 94a-f: - outlet apertures
- 95a-e: - baffles
- 96: - fifth liquid treatment cartridge
- 97: - liquid-permeable wall
- 98: - vessel-shaped housing component
- 99: - cartridge axis
- 100: - side wall
- 101: - bottom wall
- 102: - planar section
- 103a-e: - inlet apertures
- 104: - sealing rim
- 105: - dome-shaped part
- 106: - venting aperture
- 107a-f: - outlet apertures
- 108a-e: - baffles
- 109: - third device
- 110: - jug
- 111: - handle
- 112: - base
- 113: - passage
- 114: - first vessel interior space
- 115: - first mouth
- 116: - second mouth
- 117: - second vessel interior space
- 118: - section
- 119: - sixth liquid treatment cartridge
- 120: - partitioning wall section
- 121: - jug side wall
- 122: - lip
- 123: - lid
- 124: - spout cover
- 125: - liquid-permeable wall
- 126: - vessel-shaped housing component
- 127: - stub
- 128: - chamber
- 129: - outlet apertures
- 130: - sealing element
- 131: - cartridge axis
- 132: - cartridge side wall
- 133: - cartridge bottom wall
- 134: - venting aperture
- 135: - device for forming a liquid treatment system
- 136: - vessel
- 137: - first vessel interior space
- 138: - second vessel interior space
- 139: - section
- 140: - first mouth
- 141: - second mouth
- 142: - first partitioning wall
- 143: - second partitioning wall
- 144: - aperture
- 145: - base
- 146: - passage
- 147: - tap

## Claims

1. Device for forming a liquid treatment system, including:
a component (25;29;35;42;71;96;119) including a liquid-permeable wall (24;31;36;46;84;97;125); and
at least one vessel (1;58;110;136), the at least one vessel (1;58;110;136) defining:
a first vessel interior space (6;61; 114; 137) for receiving liquid to be treated;
a second vessel interior space (22;73;117;138) for treated liquid; and
a section (23;72;118;139) for accommodating a liquid treatment medium,
wherein the first and second vessel interior spaces (6,22;61,73;114,117;137,138) are in liquid communication with each other via the section (23;72;118;139),
wherein a majority of the first vessel interior space (6;61;114;137) is arranged at a level at least equal to a level of the section (23;72;118;139) in an upright orientation of the at least one vessel (1;58;110;136), and
wherein the component (25;29;35;42;71;96;119) is arranged in a position in which the component (25;29;35;42;71;96;119) closes one of an opening between the second vessel interior space (22;73;117;138) and the section (23;72;118;139) and a passage (113) from the first vessel interior space (6;61;114;137) so as to allow liquid to flow between the second vessel interior space (22;73;117;138) and the section (23;72;118;139) through the liquid-permeable wall (24;31;36;46;84;97;125), **characterised in that**
the component (25;29;35;42;71;96;119) is movable into the position through the second vessel interior space (22;73;117;138).

2. Device according to claim 1,
wherein the first vessel interior space (6;61;114;137) has a smaller volume than at least the second vessel interior space (22;73;117;138) and the section (23;72;118;139) combined, e.g. a smaller volume than the second vessel interior space (22;73;117;138).

3. Device according to claim 1 or 2,
wherein the section (23;72;139) is arranged beneath the second vessel interior space (22;73;138) in the upright orientation and the liquid-permeable wall (24;31;36;46;84;97) is at least part of a partition separating the second vessel interior space (22;73;138) from the section (23;72;139).

4. Device according to any one of the preceding claims,
wherein at least one of the at least one vessels (1;58;110) is portable.

5. Device according to any one of the preceding claims,
wherein the section (23;72;118;139), the first vessel interior space (6;61;114;137) and the second vessel interior space (22;73;117;138) are defined in a single vessel (1;58;110;136) by at least one partition (5;66,67;120;142,143).

6. Device according to claims 4 and 5,
wherein the second vessel interior space (22;73;138) is open at a main mouth (9;74) at a top of the vessel (1;58;136), and
wherein the device includes a main closure part (16;76) for closing at least a majority of the main mouth (9;74) and a further closure part (17;63) for closing and opening a fill opening (7;62) providing access to the first vessel interior space (6;61) independently of the closing of at least a majority of the main mouth (9;74) by the main closure part (16;76).

7. Device according to claim 4 and at least one of claims 5-6,
further including a handle (2;59;111),
wherein the first vessel interior space (6;61;114) is at least partly defined inside the handle (2;59;111).

8. Device according to any one of the preceding claims,
including an outlet (10;80,81;147) for dispensing liquid from at least one of the section (23;72;139) and the second vessel interior space (22;73;138) and a seat (82a-d) for receiving a replaceable liquid treatment device (12;83) in a path of the liquid to the outlet (10;80,81;147).

9. Device according to any one of the preceding claims,
wherein the component (29;35;42;71;96;119) comprises a cartridge having a housing defining a chamber in which the liquid treatment medium is arranged, and
wherein the liquid-permeable wall (31;36;46;84;97;125) is part of the housing.

10. Cartridge for use in a device according to claim 9,
wherein the cartridge housing comprises:
an axis (87;99;131) transverse to the liquid-permeable wall (84;97;125);
at least one liquid inlet (53a,b;91a-e;103a-e;127), each located on only one side of a plane containing the cartridge axis (87;99;131); and
at least one liquid outlet (55;94a-f;107a-f;129), formed at least partly in the liquid-permeable wall (46;84;97;129)

11. Cartridge according to claim 10,
wherein the at least one liquid outlets (55;94a-f;107a-f;129) are each arranged only on an opposite side of the plane to the at least one liquid inlets (53a,b;91a-e;103a-e;127).

12. Cartridge according to claim 10 or 11,
wherein the cartridge housing has an elongated shape, seen looking onto the liquid-permeable wall (46;84;97;125), and
wherein the liquid inlet(s) (53a,b;91a-e;103a-e;127) and the liquid outlet(s) (55;94a-f;107a-f;129) are provided on opposite sides in longitudinal direction.

13. Cartridge according to any one of claim 10-12, comprising
at least one baffle (47a-e,56a-f;95a-e;108a-e) defining a meandering flow path through the chamber.

14. Liquid treatment system, including a device (57;109;135) according to any one of claims 1-9 and the liquid treatment medium or a
cartridge (42;71;96;119) according to any one of claims 10-13 containing the liquid treatment medium.

15. Liquid treatment system according to claim 14,
wherein the device (57;135) is a device according to claim 8,
further including the liquid treatment device (12;83),
wherein the liquid treatment device (12;83) includes at least one liquid treatment medium for the treatment of liquid by sorption, e.g. activated carbon.
